# EUROPEAN PATENT SPECIFICATION

(11) **EP 3 266 269 B1**
(45) Date of publication and mention of the grant of the patent: **26.08.2020**
(21) Application number: 16759253.4
(22) Date of filing: 11.02.2016
(51) Int. Cl.: H04W 74/08, H04W 84/12, H04L 27/26

(54) **ORTHOGONAL FREQUENCY DIVISION MULTIPLE ACCESS BASED DISTRIBUTED CHANNEL ACCESS**
OFDMA-BASIERTER VERTEILTER KANALZUGRIFF
ACCÈS AU CANAL DISTRIBUÉ BASÉ SUR L'ACCÈS MULTIPLE PAR RÉPARTITION ORTHOGONALE DE LA FRÉQUENCE

(30) Priority: 03.03.2015 US 201562127675 P; 25.09.2015 US 201514866298
(43) Date of publication of application: 10.01.2018
(73) Proprietor: Intel IP Corporation, Santa Clara, CA 95054 (US)
(72) Inventor: GHOSH, Chittabrata Chitto, Fremont, California 94538 (US); STACEY, Robert, Portland, Oregon 97210 (US)
(74) Representative: HGF
(86) International application number: PCT/US2016/017570
(87) International publication number: WO 2016/140790

(56) References cited:
- WO-A1-03/061204
- WO-A1-2011/140302
- WO-A1-2014/112707
- KR-A- 20070 060 597
- KR-A- 20100 083 040
- KR-A- 20130 042 104
- US-A1- 2011 051 697
- YOUNG HOON KWON (NEWRACOM): "Issues on UL-OFDMA", IEEE DRAFT; 11-14-1431-00-00AX-ISSUES-ON-UL-OFDMA, IEEE-SA MENTOR, PISCATAWAY, NJ USA , vol. 802.11ax 3 November 2014 (2014-11-03), pages 1-19, XP068118060, Retrieved from the Internet: URL:https://mentor.ieee.org/802.11/dcn/14/ 11-14-1431-00-00ax-issues-on-ul-ofdma.pptx [retrieved on 2014-11-03]

## Description

### TECHNICAL FIELD

This disclosure generally relates to systems and methods for wireless communications and, more particularly, to Orthogonal Frequency Division Multiple Access-(OFDMA-) based Distributed Channel Access (ODCA).

### BACKGROUND

Wireless devices are becoming widely prevalent and are increasingly requesting access to wireless channels. A next generation WLAN, IEEE 802.11 ax or High-Efficiency WLAN (HEW), is under development. HEW utilizes Orthogonal Frequency-Division Multiple Access (OFDMA) in channel allocation.

However, when two devices are communicating via HEW, power asymmetry of the two devices may pose difficulties for the two devices to establish a secure connection. For example, an access point may have 20 dBm of available power to transmit a signal (e.g., a 20 MHz transmission), whereas a wireless station may have only 10 dBm of available power to transmit a signal (e.g., a 2 MHz transmission). In this manner, it may be difficult for the wireless station to transmit a signal to the access point due to having fewer power resources.

US 2011/051697 A1 discloses a wireless communication device having a controller module that transmits an access probe to a service network and retransmits the access probe in response to not receiving an acknowledgement of the access probe from the service network. The waitinq period of time is determined according to a coherence-time related offset. The invention provides a non-transitory computer readable medium as defined in claim 1 and a method as defined in claim 8.

### BRIEF DESCRIPTION OF THE DRAWINGS

FIG. 1 depicts a network diagram illustrating an example network environment of an illustrative OFDMA-based Distributed Channel Access (ODCA) system, according to one or more example embodiments of the disclosure.
FIG. 2 depicts an illustrative resource unit allocation based on an ODCA trigger frame, according to one or more example embodiments of the disclosure.
FIG. 3 depicts an illustrative ODCA back-off procedure, according to one or more example embodiments of the disclosure.
FIG. 4 depicts an example process flow for activating an ODCA back-off procedure, according to one or more example embodiments of the disclosure.
FIG. 5 depicts an example of a communication device, according to one or more example embodiments of the disclosure.
FIG. 6 depicts an example of a radio unit, according to one or more example embodiments of the disclosure.
FIG. 7 depicts an example of a computational environment, according to one or more example embodiments of the disclosure.
FIG. 8 depicts another example of a communication device, according to one or more example embodiments of the disclosure.

### DETAILED DESCRIPTION

The following description and the drawings sufficiently illustrate specific embodiments to enable those skilled in the art to practice them. Other embodiments may incorporate structural, logical, electrical, process, and other changes. Portions and features of some embodiments may be included in, or substituted for, those of other embodiments. Embodiments set forth in the claims encompass all available equivalents of those claims.

Example embodiments described herein provide certain systems, methods, and devices, for controlling random access with trigger frames in wireless local area networks (WLANs). As such, Wi-Fi-enabled devices in various Wi-Fi networks, including, but not limited to, IEEE 802.11ax, may utilize embodiments described herein.

Embodiments described herein may be directed to activating and deactivating particular wireless communication methods when transmitting data. For example, if a wireless station fails to transmit to an access point a data packet a predetermined number of transmission attempts using a first wireless communication method (e.g., Enhanced Distributed Channel Access (EDCA)), the first wireless communication method may be deactivated, while a second wireless communication method (e.g., OFDMA-based Distributed Channel Access (ODCA)) may be activated and utilized by the wireless station for retransmission of the data packet. Upon successful transmission of the data packet using the second wireless communication method, the second wireless communication method may be deactivated, and the first wireless communication method may be reactivated.

More particularly, the second wireless communication method may utilize a linear random backoff method. For example, the wireless station may be assigned a random integer within a dynamically-determined range of integers, where the assigned integer is decremented by one each time a random-access-enabled trigger frame is received by the wireless station. When the assigned integer reaches zero, the wireless station attempts to transmit the data packet using the second wireless communication method. In this manner, embodiments disclosed herein reduce the potential for collisions of data packets being transmitted by multiple wireless stations while providing a secure alternative means for ensuring timely and accurate communication of the data packet.

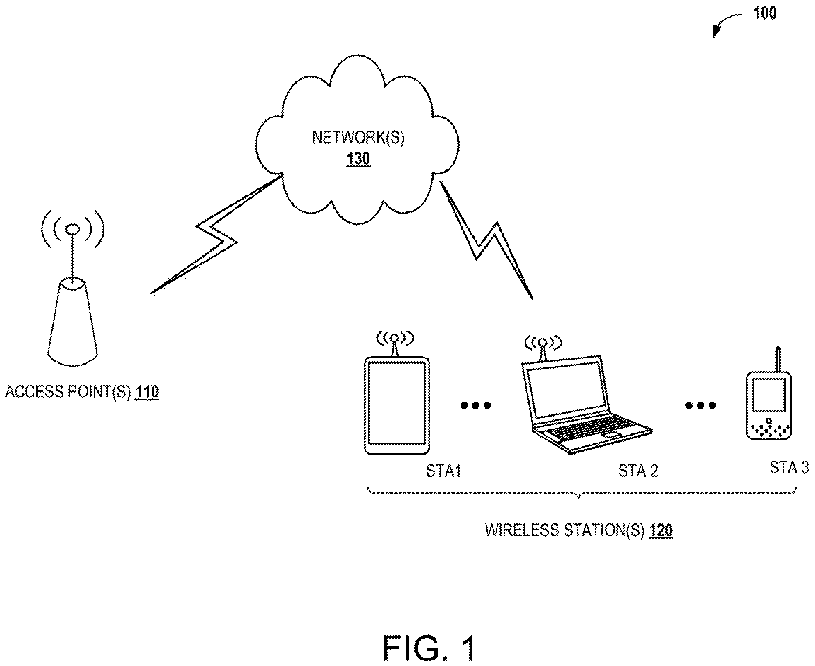

Referring now to the drawings, FIG. 1 illustrates a wireless communication system 100 in accordance with one or more embodiments of the disclosure. For example, the wireless communication system 100 may comprise one or more access points 110 and/or one or more wireless stations 120. Typically, the one or more access points 110 communicate with the one or more wireless stations 120 over one or more networks 130.

In some embodiments, the one or more access points 110 may be operable by and/or associated with one or more service providers such as a cable company, a fiber company, a wireless network provider, an Internet provider, a Wi-Fi hotspot operator, and/or the like. Typically, the one or more access points 110 provide access to the Internet or other wireless network, and/or the like.

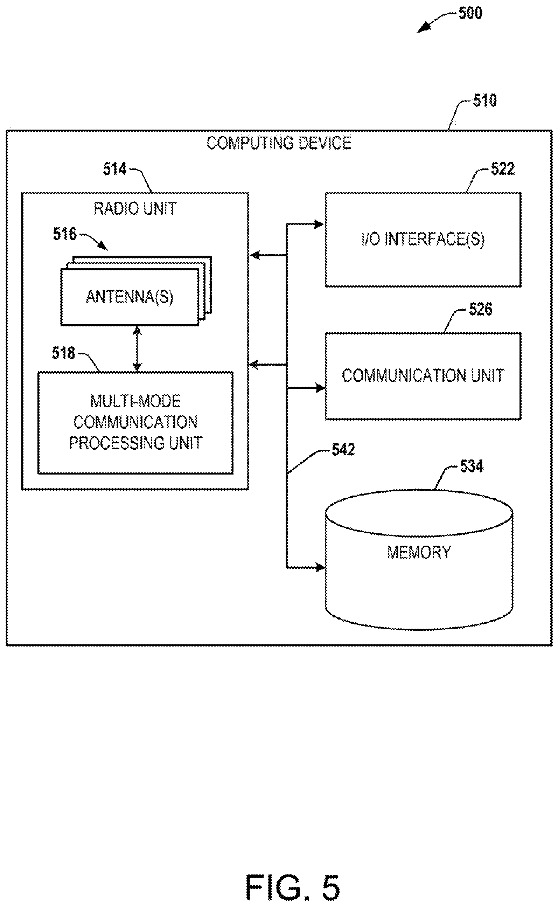

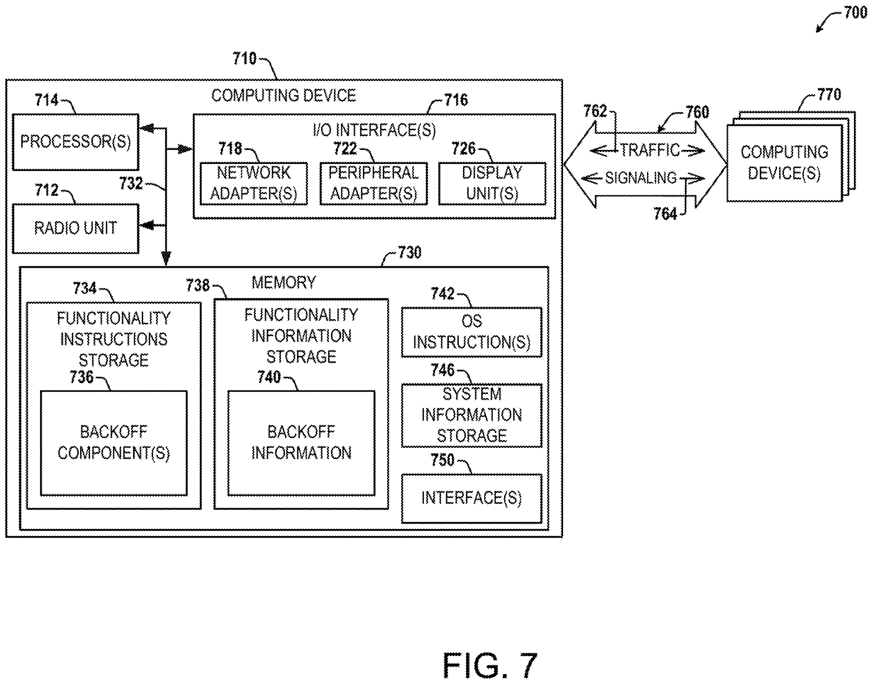

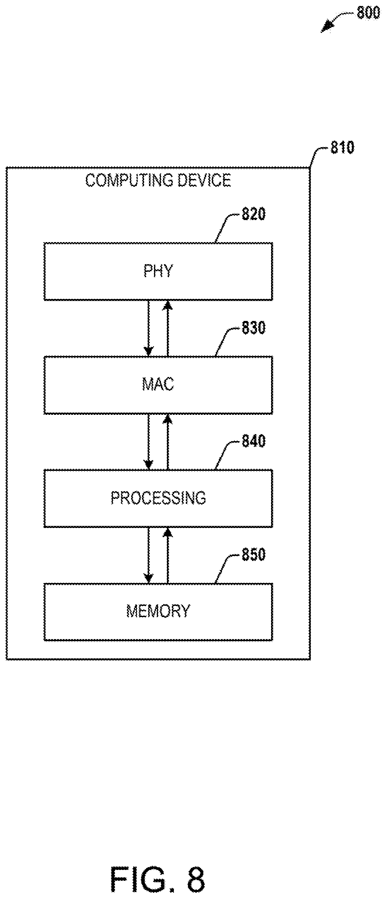

The one or more access points 110 may include any suitable processor-driven device including, but not limited to, a mainframe server, a hard drive, a desktop computing device, a laptop computing device, a router, a switch, a smartphone, a tablet, a wearable wireless device (e.g., a bracelet, a watch, glasses, a ring, an implant, and/or the like) and/or so forth. For example, the one or more access points 110 may embody computing device 502 of FIG. 5, computing device 702 of FIG. 7, computing device 802 of FIG. 8, and/or the like. The term "access point" (AP) (e.g., access point(s) 110) as used herein may be a fixed station. An access point 110 may also be referred to as an access node, a base station or some other similar terminology known in the art. An access point 110 may also be called a mobile station, user equipment (UE), a wireless communication device or some other similar terminology known in the art.

The one or more wireless stations 120 (STAs) may be operable by one or more respective users (e.g., subscribers, viewers, customers, consumers, operators, administrators, agents, and/or the like) of the one or more wireless stations. For example, the one or more wireless stations 120 may be associated with subscribers of an Internet services provided by the one or more access points 110. In some embodiments, users of the one or more wireless stations 120 may enter and/or have entered an agreement with a service provider associated with the one or more access points 110 to receive video content, where access to a service (e.g., wireless Internet access) provided by the service provider via the one or more access points 110 (and/or a secure enclave of the one or more access points 110) to the one or more wireless stations 120 based at least in part on the agreement.

The wireless station(s) 120 may include any suitable processor-driven user device including, but not limited to, a desktop computing device, a laptop computing device, a server, a router, a switch, a smartphone, a tablet, wearable wireless device (e.g., bracelet, watch, glasses, ring, implant, etc.) and so forth. For example, the one or more wireless stations 120 may embody computing device 502 of FIG. 5, computing device 702 of FIG. 7, computing device 802 of FIG. 8, and/or the like. Alternatively, the one or more wireless stations 120 may be routers, repeaters, and/or any other type of networking hardware.

Any of the access points 110 and/or the wireless station(s) 120 may be configured to communicate with each other and any other component of the wireless communication system 100 via one or more communications networks (e.g., networks 130). Any of the communications networks 130 may include, but are not limited to, any one or a combination of different types of suitable communications networks such as, for example, broadcasting networks, cable networks, public networks (e.g., the Internet), private networks, wireless networks, cellular networks, or any other suitable private and/or public networks. Further, any of the communications networks 130 may have any suitable communication range associated therewith and may include, for example, global networks (e.g., the Internet), metropolitan area networks (MANs), wide area networks (WANs), local area networks (LANs), or personal area networks (PANs). In addition, any of the communications networks 130 may include any type of medium over which network traffic may be carried including, but not limited to, coaxial cable, twisted-pair wire, optical fiber, a hybrid fiber coaxial (HFC) medium, microwave terrestrial transceivers, radio frequency communication mediums, white space communication mediums, ultra-high frequency communication mediums, satellite communication mediums, or any combination thereof.

The one or more access points 110 may communicate with the one or more wireless stations 120 (e.g., data, content, and/or the like may be transmitted, retrieved, and/or received between the one or more access points 110 and/or the one or more wireless stations 120). As used within this document, the term "communicate" is intended to include transmitting, or receiving, or both transmitting and receiving. This may be particularly useful in claims when describing the organization of data that is being transmitted by one device and received by another, but only the functionality of one of those devices is required to infringe the claim. Similarly, the bidirectional exchange of data between two devices (both devices transmit and receive during the exchange) may be described as "communicating," when only the functionality of one of those devices is being claimed. The term "communicating" as used herein with respect to a wireless communication signal includes transmitting the wireless communication signal and/or receiving the wireless communication signal. For example, a wireless communication unit (e.g., an access point 110), which is capable of communicating a wireless communication signal, may include a wireless transmitter to transmit the wireless communication signal to at least one other wireless communication unit (e.g., a wireless station 120), and/or a wireless communication receiver to receive the wireless communication signal from at least one other wireless communication unit.

Some embodiments may be used in conjunction with various devices and systems, for example, a Personal Computer (PC), a desktop computer, a mobile computer, a laptop computer, a notebook computer, a tablet computer, a server computer, a handheld computer, a handheld device, a Personal Digital Assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless access point (AP), a wired or wireless router, a wired or wireless modem, a video device, an audio device, an audio-video (A/V) device, a wired or wireless network, a wireless area network, a Wireless Video Area Network (WVAN), a Local Area Network (LAN), a Wireless LAN (WLAN), a Personal Area Network (PAN), a Wireless PAN (WPAN), and the like.

Some embodiments may be used in conjunction with one way and/or two-way radio communication systems, cellular radio-telephone communication systems, a mobile phone, a cellular telephone, a wireless telephone, a Personal Communication Systems (PCS) device, a PDA device which incorporates a wireless communication device, a mobile or portable Global Positioning System (GPS) device, a device which incorporates a GPS receiver or transceiver or chip, a device which incorporates an RFID element or chip, a Multiple Input Multiple Output (MIMO) transceiver or device, a Single Input Multiple Output (SIMO) transceiver or device, a Multiple Input Single Output (MISO) transceiver or device, a device having one or more internal antennas and/or external antennas, Digital Video Broadcast (DVB) devices or systems, multi-standard radio devices or systems, a wired or wireless handheld device, e.g., a Smartphone, a Wireless Application Protocol (WAP) device, or the like.

Some embodiments may be used in conjunction with one or more types of wireless communication signals and/or systems following one or more wireless communication protocols, for example, Orthogonal Frequency-Division Multiple Access (OFDMA), Radio Frequency (RF), Infra-Red (IR), Frequency-Division Multiplexing (FDM), Orthogonal FDM (OFDM), Time-Division Multiplexing (TDM), Time-Division Multiple Access (TDMA), Extended TDMA (E-TDMA), General Packet Radio Service (GPRS), extended GPRS, Code-Division Multiple Access (CDMA), Wideband CDMA (WCDMA), CDMA 2000, single-carrier CDMA, multi-carrier CDMA, Multi-Carrier Modulation (MDM), Discrete Multi-Tone (DMT), Bluetooth®, Global Positioning System (GPS), Wi-Fi, Wi-Max, ZigBeeTM, Ultra-Wideband (UWB), Global System for Mobile communication (GSM), 2G, 2.5G, 3G, 3.5G, 4G, Fifth Generation (5G) mobile networks, 3GPP, Long Term Evolution (LTE), LTE advanced, Enhanced Data rates for GSM Evolution (EDGE), or the like. Other embodiments may be used in various other devices, systems, and/or networks.

Further, any of the one or more access points 110 and/or the one or more wireless stations 120 may include one or more communications antennae. Communications antenna may be any suitable type of antenna corresponding to the communications protocols used by the one or more access points 110 and/or the one or more wireless stations 120. Some non-limiting examples of suitable communications antennas include WiFi antennas, IEEE 802.11 family of standards compatible antennas, directional antennas, non-directional antennas, dipole antennas, folded dipole antennas, patch antennas, MIMO antennas, or the like. The communications antenna may be communicatively coupled to a radio component to transmit and/or receive signals, such as communications signals to and/or from the one or more access points 110 and/or the one or more wireless stations 120. Any of the one or more access points 110 and/or the one or more wireless stations 120 may include any suitable radio and/or transceiver for transmitting and/or receiving radio frequency (RF) signals in the bandwidth and/or channels corresponding to the communications protocols utilized by any of the one or more access points 110 and/or the one or more wireless stations 120 to communicate with each other. The radio components may include hardware and/or software to modulate and/or demodulate communications signals according to pre-established transmission protocols. The radio components may further have hardware and/or software instructions to communicate via one or more WiFi and/or WiFi direct protocols, as standardized by the Institute of Electrical and Electronics Engineers (IEEE) 802.11 standards. In certain example embodiments, the radio component, in cooperation with the communications antennas, may be configured to communicate via 2.4 GHz channels (e.g. IEEE 802.11b, IEEE 802.11g, IEEE 802.11n), 5 GHz channels (e.g. IEEE 802.11n, IEEE 802.11ac), or 60 GHZ channels (e.g. IEEE 802.11ad) or any other IEEE 802.11 type channels (e.g., IEEE 802.11ax). In some embodiments, non-WiFi protocols may be used for communications between devices, such as Bluetooth, dedicated short-range communication (DSRC), Ultra-High Frequency (UHF), white band frequency (e.g., white spaces), or other packetized radio communications. The radio component may include any known receiver and baseband suitable for communicating via the communications protocols. The radio component may further include a low noise amplifier (LNA), additional signal amplifiers, an analog-to-digital (A/D) converter, one or more buffers, and digital baseband.

In a wireless connection between the one or more access points 110 and/or the one or more wireless stations 120, a direction of data from the one or more access points 110 to the one or more wireless stations 120 may be referred to as downlink direction. Conversely, an uplink connection may be used to send data from the one or more wireless stations 120 back to the one or more access points 110. Typically, when the one or more access points 110 establishes communication with the one or more wireless stations 120, the one or more access points 110 may communicate in the downlink direction by sending data packets to the one or more wireless stations 120. The data packets may be preceded by one or more preambles that may be part of one or more headers. These preambles may be read by the one or more wireless stations 120 and used to allow the one or more wireless stations 120 to detect incoming data packets (e.g., video content, associated information, and/or the like) from the one or more access points 110. In some embodiments, the preambles may be a signal, an identifier, and/or the like used in network communications to synchronize transmission timing between two or more devices (e.g., between the one or more access points 110 and/or the one or more wireless stations 120). The length of each preamble may affect the time required to transmit data between devices, which in turn may increase data packet overhead.

In some embodiments, uplink and/or downlink data packet formats may follow one of the IEEE standards, (e.g., IEEE 802.11 ac). For example, an uplink and/or downlink data packet may contain a legacy preamble that may be compatible with legacy standards such as 802.11. The downlink data packet may also contain a very high throughput (VHT) preamble that may contain a number of timeslots that may have a certain time duration and that may contain various fields that may follow one or more IEEE standards (e.g., IEEE 802.11 ac).

In some embodiments, channel or stream training may be needed to allow a receiver of the data packets (e.g., the one or more wireless stations 120) to properly synchronize with the transmitter of the data packets (e.g., the one or more access points 110, a second wireless station 120, and/or the like). For example, in the downlink direction from the one or more access points 110 to the one or more wireless stations 120, the one or more access points 110 may transmit a channel training symbol or a training field that may be used to train (e.g., synchronize) the one or more wireless stations 120 with the one or more access points 110 to accurately and consistently send and receive data to and from the one or more access points 110.

Multi-user multiple-input multiple-output antenna system (MU-MIMO) may provide an enhancement for the IEEE 802.11 family of standards. With MU-MIMO, multiple wireless stations 120 may be served at the same time by the one or more access points 110. Some of the IEEE 802.11 standards (e.g., IEEE 802.11ax) may use OFDMA to boost the amount of data the one or more access points 110 may transmit. Like OFDM (orthogonal frequency-division multiplexing), OFDMA encodes data on multiple subcarrier frequencies-essentially packing more data into the same amount of air space. It is understood that OFDMA is a multi-user version of OFDM digital modulation scheme. Multiple access may be achieved in OFDMA by assigning subsets of subcarriers to individual users and/or wireless stations 120, which may allow simultaneous data rate transmission from several users and/or wireless stations 120. For example, multiple access methods may allow several wireless stations 120 that may be connected to the same access point 110 to transmit over it and to share its capacity.

Beamforming or spatial filtering is a signal processing technique used in sensor arrays for directional signal transmission or reception. Beamforming may be used at both the transmitting and receiving ends of the one or more access points 110 and/or the one or more wireless stations 120 in order to achieve spatial selectivity. It is understood that beamforming may be used for radio or sound waves. Beamforming may be found in applications such as radar, sonar, seismology, wireless communications, radio astronomy, acoustics, and biomedicine. In some embodiments, crosstalk between different communications channels (e.g., signal distortion) may be mitigated by transmitting additional training fields that may exist between communication channels.

In some instances, a transmitter, such as the one or more access points 110, may transmit a trigger frame (e.g., a data packet, a training field, a channel training symbol, and/or the like) to the one or more wireless stations 120. The trigger frame may be sent periodically and/or continuously and may include scheduling information for frequency, subband, and/or spatial stream designations for respective wireless stations 120 in communication with the one or more access points 110. In some embodiments, each wireless station 120 may be designated a particular frequency and/or subband for communication with the one or more access points 110. Alternatively, each wireless station 120 may be designated a frequency and/or subband that is dynamic and therefore may change depending on particular conditions (e.g., current traffic, measured distortion, predicted traffic, and/or the like). The one or more wireless stations 120 may use information provided in the trigger frame (or in a header of the trigger frame) to synchronize with the one or more access points 110. Communication between each wireless station 120 and the one or more access points 110 typically occurs over one or more channels (e.g., streams of data).

In accordance with some IEEE 802.11ax (High-Efficiency WLAN (HEW)) embodiments, an access point may operate as a master station which may be arranged to contend for a wireless medium (e.g., during a contention period) to receive exclusive control of the medium for an HEW control period. The master station may transmit an HEW master-sync transmission at the beginning of the HEW control period. During the HEW control period, HEW stations may communicate with the master station in accordance with a non-contention based multiple access technique. This is unlike conventional Wi-Fi communications in which devices communicate in accordance with a contention-based communication technique, rather than a multiple access technique. During the HEW control period, the master station may communicate with HEW stations using one or more HEW frames. Furthermore, during the HEW control period, legacy stations refrain from communicating. In some embodiments, the master-sync transmission may be referred to as an HEW control and schedule transmission.

In some embodiments, the multiple-access technique used during the HEW control period may be a scheduled orthogonal frequency division multiple access (OFDMA) technique, although this is not a requirement. In other embodiments, the multiple access technique may be a time-division multiple access (TDMA) technique or a frequency division multiple access (FDMA) technique. In certain embodiments, the multiple access technique may be a space-division multiple access (SDMA) technique.

The master station may also communicate with legacy stations in accordance with legacy IEEE 802.11 communication techniques. In some embodiments, the master station may also be configurable to communicate with HEW stations outside the HEW control period in accordance with legacy IEEE 802.11 communication techniques, although this is not a requirement.

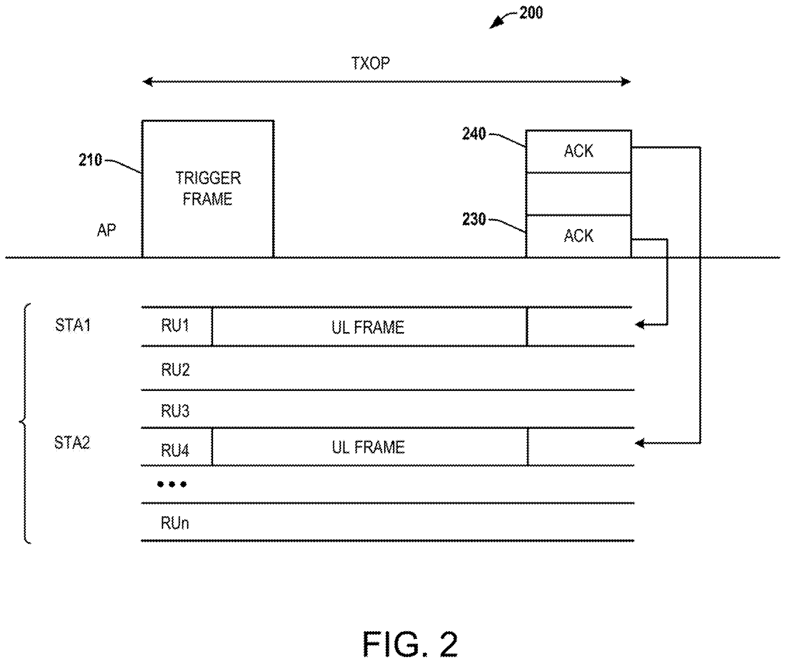

Referring now to FIG. 2, FIG. 2 illustrates an exemplary resource unit allocation 200 using trigger frames. For example, the one or more access points 110 may transmit a trigger frame 210 to the one or more wireless stations 120. The trigger frame (e.g., element 220 of FIG. 2) may include, in some embodiments, various pieces of allocation information such as resource units (e.g., frequency bands) to be used for transmission with each wireless station 120, information that enables the one or more wireless stations 120 to allocate a predetermined number of resource units (e.g., channels, subbands of a channel, and/or the like) for a transmission to the one or more access points 110, a transmission type (e.g., random access, and/or the like), timing and/or scheduling information, resource allocation information, and/or the like. This allocation information may be utilized by the one or more wireless stations 120 and/or the one or more access points 110 to establish a wireless connection between each other. Typically, the trigger frame is a portion of the frequency spectrum divided into one or more resource units (e.g., frequency bands). For example, a trigger may include 20 MHz of bandwidth, while each resource unit may include 2 MHz (or 4 MHz, or multiples of 2 and/or 4 MHz) of bandwidth. Trigger frames may be cascaded and/or have a fixed or dynamic length and/or number of resource units. Resource units (RU) may be configured for non-random access and/or random access (e.g., AID0).

As illustrated in FIG. 2, the one or more access points 110 may allocate a predetermined number of resource units (e.g., bands in the frequency spectrum) in the trigger frame to random access functionalities. As such, resource units allocated to random access may enable the one or more access points 110 and/or the one or more wireless stations 120 to communicate using random access communication methods. In some embodiments, resource units allocated to random access may be referred to as association identification (AID0) resource units. These AID0 resource units, when received by the one or more wireless stations 120, enable the one or more wireless stations 120 to communicate via random access methods described herein.

The one or more access points 110 may transmit (e.g., broadcast, and/or the like) a trigger frame so that it may be received by any wireless station(s) 120 within range of the one or more access points 110. In some embodiments, the trigger frame is transmitted periodically, continuously, and/or the like by the one or more access points 110. Accordingly, the trigger frame may be received by one or more wireless stations 120. In some embodiments, the one or more wireless stations 120 may be associated with and/or unassociated with (e.g., may or may not have an existing prior communication connection) the one or more access points 110.

In response to receiving the trigger frame, the one or more wireless stations 120 (e.g., wireless station(s) 120 that are unassociated with the one or more access points 110 and/or may randomly select one or more random access-enabled resource units to communicate an uplink frame. In some embodiments, the one or more wireless stations 120 may use the trigger frame to identify the one or more random access-enabled resource units. Further, the uplink frame may include various information associated with a respective wireless station 120 such as a resource request frame for requesting and/or allocating various resources required by the wireless station 120, a management frame such as a probe request, an association request, and/or an access network query protocol (ANQP) frame, a quality of service (QoS) data frame, a power save (PS) poll frame, and/or the like. Each of the one or more wireless stations 120 may transmit to the one or more access points 110 a respective uplink frame.

The one or more access points 110 may receive the uplink frame(s) of the one or more wireless stations 120. In some embodiments, the one or more access points 110 may provide (e.g., transmit) an acknowledgement to the one or more wireless stations 120 to indicate that the uplink frame(s) of the one or more wireless stations 120 (as well as any information included in and/or associated with the uplink frame(s)) were received by the one or more access points 110. For example, an access point 110 may generate and/or provide a first acknowledgement 230 to a first wireless station 120 and a second acknowledgement 240 to a second wireless station 120 as depicted in FIG. 2. Typically, the one or more access points 110 may then utilize the uplink frame(s) and/or information included in and/or associated with the uplink frame(s) to establish a wireless communication connection between the one or more access points 110 and/or the one or more wireless stations 120, allow for data, information, and/or the like to be transmitted between the one or more access points 110 and/or the one or more wireless stations 120, and/or the like.

However, in some embodiments, a limited number of resource units may be allocated for random access per trigger frame, which may lead to a relatively high collision rate between simultaneous transmissions of multiple wireless stations 120. For example, if multiple wireless stations 120 are attempting to communicate to a common access point 110 at the same time, transmission collisions may occur. Accordingly, more random access-allocated resource units may be generated by cascading trigger frames utilizing backoff techniques described in more detail below.

Typically, once a wireless communication connection has been established between the one or more access points 110 and/or the one or more wireless stations 120, the one or more access points 110 and/or the one or more wireless stations 120 may utilize enhanced distributed channel access (EDCA) as a first wireless communication method. For example, a wireless station 120 may transmit a data packet to an access point using EDCA methods. In some embodiments, the one or more access points 110 and/or the one or more wireless stations 120 may continuously monitor a status of each attempted transmission from the one or more wireless stations 120. For example, the one or more wireless stations 120 may determine if a transmission has been successful and/or has failed.

If a transmission from a wireless station 120 to an access point 110 is determined to have failed (e.g., due to contention with other stations, and/or the like), the wireless station 120 may attempt to reattempt the transmission using EDCA wireless communication methods. In some embodiments, the wireless station 120 may count a number of retransmission attempts using EDCA wireless communication methods.

If the wireless station 120 determines that a counted number of retransmission attempts using EDCA wireless communication methods reaches and/or exceeds a predetermined threshold value (e.g., a maximum number of retransmission attempts), then the wireless station 120 may activate a second wireless communication method for subsequent retransmission attempts. For example, the wireless station 120 may utilize OFDMA-based distributed channel access (ODCA) as the second wireless communication method, which typically utilizes random access techniques described herein. In some embodiments, activating the second wireless communication method includes deactivating the first wireless communication method (e.g., EDCA).

Utilizing ODCA wireless communication methods may include utilizing random access backoff procedures described herein. For example, the wireless station 120 may begin by selecting a random integer from a predetermined range of random integers (e.g., a contention window (CWO) for OFDMA transmissions). The CWO typically is defined by a minimum (CWOmin) integer value and a maximum (CWOmax) integer value. In some embodiments, the CWOmax may be increased after each subsequent failed retransmission attempt. For example, the CWOmax may be increased by a factor of two (e.g., 2ⁿ where n is the number of failed retransmission attempts, exponentially, linearly, and/or the like). In this manner, if multiple wireless stations 120 are attempting to retransmit using random backoff techniques and/or ODCA wireless communication methods and their retransmission attempts are colliding, then the range of numbers from which each wireless station 120 may select a backoff counter value increases to reduce the likelihood of a future collision.

The randomly selected integer by the wireless station 120 may be utilized as a backoff counter value. For example, the wireless station 120 may listen for each time the access point 110 transmits AIDO-enabled (e.g., random access-enabled) resource units included in trigger frames. Upon receipt of each AIDO-enabled resource unit, the backoff counter value may decrement by one. When the backoff counter value reaches zero, the wireless station 120 may then initiate a retransmission attempt.

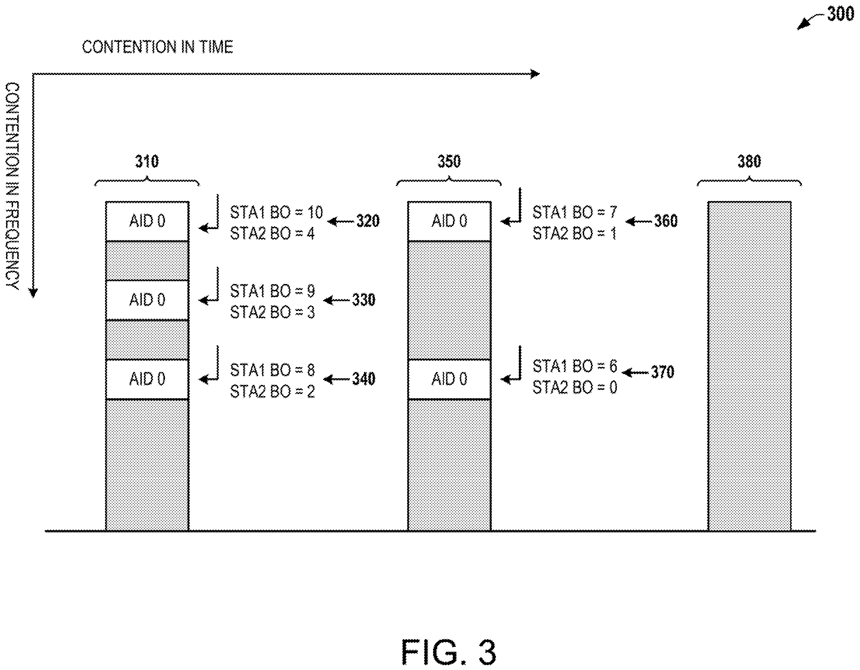

Referring now to FIG. 3, FIG. 3 illustrates an example backoff procedure 300. For example, STA1 randomly selects a backoff counter value (e.g., BO) of 11, while STA2 randomly selects a BO of 5. Upon receipt of a first trigger frame 310, the BOs of both STA1 and STA2 are decremented by one as random access-enabled (AID0) resource units 320, 330, 340 included in the trigger frame 310 are received. The procedure 300 continues upon receipt of a second trigger frame 350, wherein the BOs of both STA1 and STA2 are decremented by one as additional random access-enabled (AID0) resource units 360, 370 included in the trigger frame 350 are received. At block 370, however, the BO of STA2 reaches zero. Therefore, STA2 attempts a retransmission. Further, as depicted in FIG. 3, upon receipt of a trigger frame 280 that includes no random access-enabled (AID0) resource units, the BOs of STA1 and STA2 remain unchanged.

Therefore, when the BO (e.g., backoff counter value) reaches zero based on receipt of a random access-enabled (AID0) resource unit, the wireless device 120 may attempt to retransmit the transmission (e.g., data, and/or the like) using the same random access-enabled (AID0) resource unit. If a retransmission attempt fails, the wireless station 120 may reselect an integer value from a now-widened range of selectable integer values (CWO) as described above, and the procedure continues in a similar manner. Alternatively, if a retransmission attempt is successful, the wireless station 120 may receive an acknowledgement from the access point 110 indicating that the retransmission attempt was indeed successful. Further, the backoff counter value of the wireless station 120 may be set to CWOmin (e.g., zero).

In some embodiments, once the acknowledgement is received by the wireless station 120, the wireless station deactivates the second wireless communication method (e.g., ODCA) and reactivates the first wireless communication method (e.g., EDCA). In other embodiments, the wireless station 120 may continuously and/or simultaneously utilize EDCA wireless communication methods and/or ODCA wireless communication methods to attempt retransmissions in parallel. In alternative embodiments, the wireless station 120 may deactivate ODCA wireless communication methods if and/or when an acknowledgement is received from the access point 110 indicating that a transmission and/or retransmission attempt was successful using EDCA wireless communication methods. In this manner, ODCA wireless communication methods may be utilized by the wireless station 120 as a secondary means for retransmission due to a larger amount of resources required by the wireless station 120 for transmitting using ODCA wireless communication methods.

As described herein, an ODCA back-off procedure may be utilized to address communication asynchronies between two or more devices (e.g., between the one or more access points 11, the one or more wireless stations 120, and/or the like). For example, an access point 110 may transmit 20 MHz transmissions to multiple wireless stations 120 that are able to receive 20 MHz transmissions, but the access point 110 may not be able to receive 20 MHz transmissions from the wireless stations 120. Alternatively, discrepancies in transmit power of the access point(s) 110 and/or the wireless station(s) 120 may cause communication asynchronies.

Therefore, in order to close the link (e.g., synchronize communication), the one or more wireless stations 120 may transmit using a bandwidth narrower than 20 MHz, (e.g., 2 MHz). Transmission using 2 MHz of (e.g., less) bandwidth is available in 802.11ax when orthogonal frequency division multiple access (OFDMA) is used. With OFDMA, the one or more access points 110 can transmit a trigger frame as disclosed herein for the purpose of allocating resources to the one or more wireless stations 120. Allocation resources may include bandwidth allocation information, spatial stream allocation information, and/or any other information pertaining to synchronizing the one or more access points 110 and the one or more wireless stations 120. Individual wireless stations 120 typically use the allocated resource (e.g., 2 MHz of a spatial spectrum in a particular portion of a communication channel) to transmit data back to the access point(s) 110. The access point(s) 110, being configured to receive data via a 2 MHz bandwidth, can then establish a secure communication connection with the one or more wireless stations 120.

With this approach, the one or more wireless stations 120 can transmit a narrower bandwidth signal in response to receiving a trigger frame. However, the access point(s) 110 typically do not know which wireless stations 120 or how many wireless stations 120 have data to send, are currently transmitting data and/or scheduled to transmit data, and that can communicate with the access point(s) 110 using this mechanism. As such, a solution can be to allow random access to wireless stations 120 for communicating with the access point(s) 110 in response to receiving a trigger frame. Described herein are channel access rules for enabling wireless stations 120 to utilize random access across at least a portion of a channel for communicating with the access point(s) 110 in response to a receiving a trigger frame.

More particularly, the disclosure applies a technique of random back-off procedures to a new area: random access using OFDMA. Specifically, the disclosure utilizes a channel access method that allows a wireless station 120 to transmit data (e.g., a message, a frame, information, a signal, and/or the like) to an access point 110 using OFDMA, but without requiring the access point 110 to know that the wireless station 120 has data to transmit.

In some embodiments, two or more wireless stations 120 may attempt to transmit a signal to an access point 110 at the same time and on the same channel and/or subband of a channel (e.g., may be in contention) based on receiving a similar and/or the same trigger frame from the access point 110. In this manner, a collision of signals transmitted from a plurality of wireless stations 120 may occur, and therefore the signals may not be received by the access point 110. As such, each wireless station 120 may be configured to determine if a transmission was successful (e.g., received by the access point 110) and/or if a transmission was unsuccessful (e.g., was not received by the access point 110, collided with another transmission, and/or the like). The wireless stations 120 may further be configured to determine a number of unsuccessful transmissions and/or unsuccessful retransmissions. The wireless stations 120 may then compare the determined number of unsuccessful transmissions to a predetermined threshold value of allowable attempts for transmission and/or allowable retransmission attempts. Based on determining that the determined number of unsuccessful transmissions and/or unsuccessful retransmissions in equal to or greater than the predetermined threshold value of allowable attempts for transmission and/or allowable retransmission attempts, the wireless stations 120 may activate a second transmission method (e.g., an ODCA random back-off procedure). The ODCA random back-off procedure aims to control when and in which frequency bands (e.g., RUs) of a channel and/or a subband of channel a signal is transmitted from each wireless station 120 so that the likelihood of a signal collision is drastically reduced.

In some embodiments, each wireless station 120 may randomly select a resource unit for transmittal of a signal to the access point 110. Additionally, the access point 110 may acknowledge and/or transmit an acknowledgement of receipt of one or more signals from each wireless station 120. In this way, each wireless station 120 may more easily determine if transmission and/or retransmission attempts are successful or unsuccessful.

Various rules are proposed for activating and deactivating an OFDMA back-off procedure based on a determined number of transmission and/or retransmission attempt counts a wireless station 120 performs with the first transmission method (e.g., EDCA). This is more of a centralized approach where the resource unit assignment is under the control of the access point 110 based on allocation information included in a trigger frame.

Upon receipt of one or more trigger frames from the access point 110 and after it is determined as described herein by wireless stations 120 that the second transmission method should be activated, each wireless station 120 may randomly select a random OFDMA back-off count value for transmitting. The random OFDMA back-off count value, typically an integer between the values of 0 and a predetermined maximum, is decremented by 1 upon receipt and/or identification of each resource unit assigned for random access (e.g., AIDO) in the received trigger frames. When the back-off count value reaches zero, the signal may be transmitted. In some embodiments, the signal may be transmitted using a resource unit allocated to random access (e.g., AID0). For example, the signal may be transmitted using a randomly-selected resource unit that is configured for random access (e.g., an AID0). In some embodiments, the wireless station 120 may randomly select a resource unit (e.g., AIDO) for transmitting the signal. Alternatively, the signal may be transmitted using a predetermined resource unit (e.g., AIDO) that is assigned to the wireless station 120 and/or assigned for transmission of a particular signal. Therefore, in some embodiments, the wireless station 120 may select a predetermined resource unit (e.g., AIDO) for transmitting the signal. Additionally, the signal may be transmitted using a next available resource unit (e.g., AIDO) received from the access point 110. In other embodiments, each wireless station 120 may enabled to identify whether each resource unit included in each trigger frame is allocated to random access (e.g., AID0).

If transmission is successful (e.g., if the wireless station 120 receives a positive acknowledgement from the access point 110 that the signal was received by the access point 110), a contention window (CWO) (e.g., a range of values for the back-off counter included minimum (CWOmin) and maximum (CWOmax) values) is reset to a minimum value. If transmission is unsuccessful (e.g., no positive acknowledgement is received from the access point 110), the contention window may be reset to min(CWO+CWOmin, CWOmax). The values of CWOmin and CWOmax may be configurable and advertised in beacon frames, trigger frames, and/or predetermined fixed values.

The second transmission method may be deactivated upon a first or subsequent successful transmission (e.g., receipt of a positive acknowledgement from the access point 110). The first transmission method may be reactivated at this time.

This idea is better than an absolute random process of resource unit selections in a trigger frame, (e.g., a distributed process with wireless stations 120 selecting resources on their own when their EDCA back-off count decrements to zero). In the distributed access method, collisions may occur when multiple wireless stations 120 with their back-off counter equal to zero select the same resource unit randomly. Further, resource units may be idle in either of the following 2 cases: (i) none of the back-off counters of wireless stations 120 decremented to zero in a Trigger frame; and (ii) wireless stations 120 randomly select resource units and there were not enough wireless stations 120 to select all the resource units assigned for random access.

Again, rules are proposed for activating the OFDMA back-off procedure based on the number of retransmission counts a wireless station 120 performs with EDCA. It is proposed that any wireless station 120 continues to use the first transmission method (e.g., EDCA) for random access. In some embodiments, a wireless station 120 waits to receive any download data in response to its upload packet transmission for a number of access attempts. If the number of these access attempts exceeds a certain threshold, it activates the OFDMA-based random access method (e.g., the second transmission method). The threshold can be a configurable parameter advertised in beacons, trigger frames, and/or it can be a fixed parameter. Further, as a rule, if the wireless station 120 receives an acknowledgement for the first transmission using EDCA after a successful transmission using the second transmission method, the ODCA function is deactivated as described herein and the STA resumes EDCA-based random access (e.g., the first transmission method).

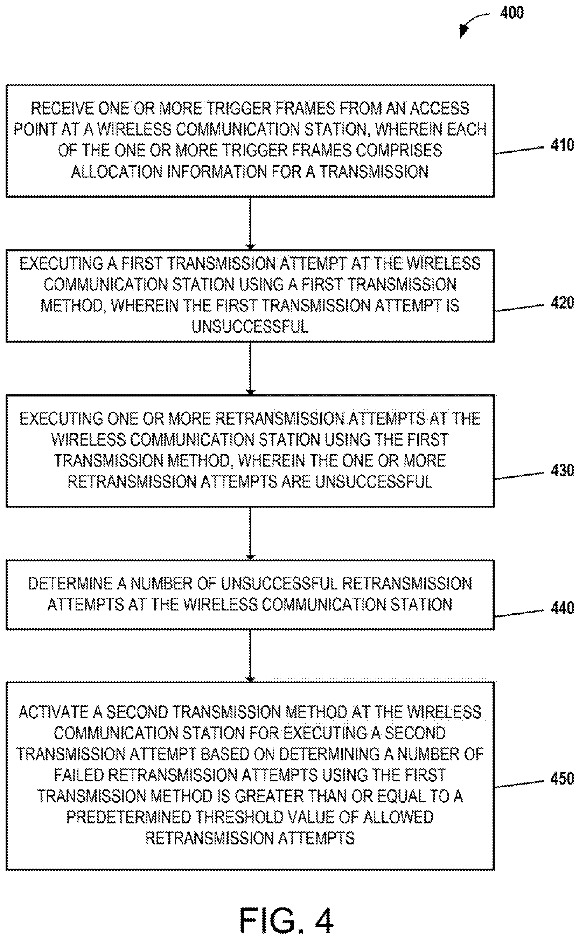

FIG. 4 illustrates an exemplary process flow 400 for activating an ODCA back-off procedure. At block 410, the process includes receiving one or more trigger frames from an access point at a wireless communication station, wherein each of the one or more trigger frames comprises allocation information for a transmission. At block 420, the process includes executing a first transmission attempt at the wireless communication station using a first transmission method, wherein the first transmission attempt is unsuccessful. At block 430, the process includes executing one or more retransmission attempts at the wireless communication station using the first transmission method, wherein the one or more retransmission attempts are unsuccessful. At block 440, the process includes determining a number of unsuccessful retransmission attempts at the wireless communication station. At block 450, the process includes activating a second transmission method at the wireless communication station for executing a second transmission attempt based on determining a number of failed retransmission attempts using the first transmission method is greater than or equal to a predetermined threshold value of allowed retransmission attempts.

FIG. 5 illustrates a block-diagram of an example embodiment 500 of a computing device 510 that can operate in accordance with at least certain aspects of the disclosure. In one aspect, the computing device 510 can operate as a wireless device and can embody or can comprise an access point (e.g., access point 110), a wireless station (e.g., wireless station(s) 120), a receiving and/or transmitting station, and/or other types of communication device that can transmit and/or receive wireless communications in accordance with this disclosure. To permit wireless communication, including joint encoding techniques as described herein, the computing device 510 includes a radio unit 514 and a communication unit 526. In certain implementations, the communication unit 526 can generate data packets or other types of information blocks via a network stack, for example, and can convey data packets or other types of information block to the radio unit 514 for wireless communication. In one embodiment, the network stack (not shown) can be embodied in or can constitute a library or other types of programming module, and the communication unit 526 can execute the network stack in order to generate a data packet or another type of information block (e.g., a trigger frame). Generation of a data packet or an information block can include, for example, generation of control information (e.g., checksum data, communication address(es)), traffic information (e.g., payload data), scheduling information (e.g., station information, allocation information, and/or the like), an indication, and/or formatting of such information into a specific packet header and/or preamble.

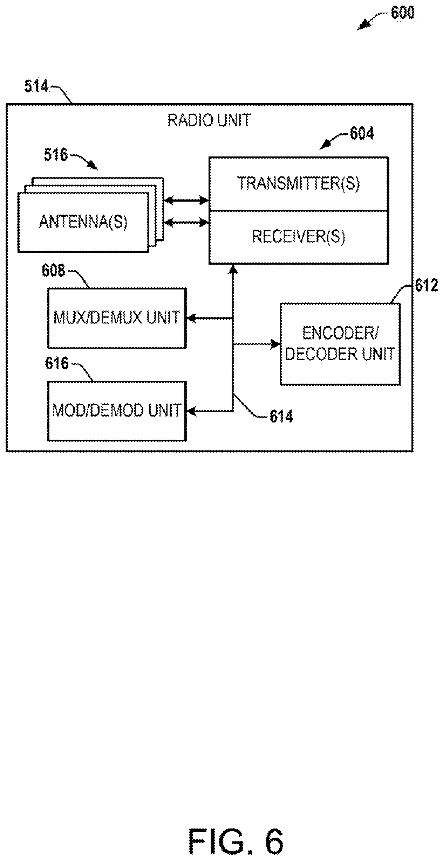

As illustrated, the radio unit 514 can include one or more antennas 516 and a multi-mode communication processing unit 518. In certain embodiments, the antenna(s) 516 can be embodied in or can include directional or omnidirectional antennas, including, for example, dipole antennas, monopole antennas, patch antennas, loop antennas, microstrip antennas or other types of antennas suitable for transmission of RF signals. In addition, or in other embodiments, at least some of the antenna(s) 516 can be physically separated to leverage spatial diversity and related different channel characteristics associated with such diversity. In addition or in other embodiments, the multi-mode communication processing unit 518 that can process at least wireless signals in accordance with one or more radio technology protocols and/or modes (such as MIMO, MU-MIMO (e.g., multiple user-MIMO), single-input-multiple-output (SIMO), multiple-input-single-output (MISO), and the like. Each of such protocol(s) can be configured to communicate (e.g., transmit, receive, or exchange) data, metadata, and/or signaling over a specific air interface. The one or more radio technology protocols can include 3GPP UMTS; LTE; LTE-A; Wi-Fi protocols, such as those of the Institute of Electrical and Electronics Engineers (IEEE) 802.11 family of standards; Worldwide Interoperability for Microwave Access (WiMAX); radio technologies and related protocols for ad hoc networks, such as Bluetooth or ZigBee; other protocols for packetized wireless communication; or the like). The multi-mode communication processing unit 518 also can process non-wireless signals (analogic, digital, a combination thereof, or the like). In one embodiment (e.g., example embodiment 600 shown in FIG. 6), the multi-mode communication processing unit 518 can comprise a set of one or more transmitters/receivers 604, and components therein (amplifiers, filters, analog-to-digital (A/D) converters, etc.), functionally coupled to a multiplexer/demultiplexer (mux/demux) unit 608, a modulator/demodulator (mod/demod) unit 616 (also referred to as modem 616), and an encoder/decoder unit 612 (also referred to as codec 612). Each of the transmitter(s)/receiver(s) can form respective transceiver(s) that can transmit and receive wireless signal (e.g., streams, electromagnetic radiation) via the one or more antennas 516. It should be appreciated that in other embodiments, the multi-mode communication processing unit 518 can include other functional elements, such as one or more sensors, a sensor hub, an offload engine or unit, a combination thereof, or the like.

Electronic components and associated circuitry, such as mux/demux unit 608, codec 612, and modem 616 can permit or facilitate processing and manipulation, e.g., coding/decoding, deciphering, and/or modulation/demodulation, of signal(s) received by the computing device 510 and signal(s) to be transmitted by the computing device 510. In one aspect, as described herein, received and transmitted wireless signals can be modulated and/or coded, or otherwise processed, in accordance with one or more radio technology protocols. Such radio technology protocol(s) can include 3GPP UMTS; 3GPP LTE; LTE-A; Wi-Fi protocols, such as IEEE 802.11 family of standards (IEEE 802.ac, IEEE 802.ax, and the like); WiMAX; radio technologies and related protocols for ad hoc networks, such as Bluetooth or ZigBee; other protocols for packetized wireless communication; or the like.

The electronic components in the described communication unit, including the one or more transmitters/receivers 604, can exchange information (e.g., data packets, allocation information, data, metadata, code instructions, signaling and related payload data, combinations thereof, or the like) through a bus 614, which can embody or can comprise at least one of a system bus, an address bus, a data bus, a message bus, a reference link or interface, a combination thereof, or the like. Each of the one or more receivers/transmitters 604 can convert signal from analog to digital and vice versa. In addition or in the alternative, the receiver(s)/transmitter(s) 604 can divide a single data stream into multiple parallel data streams, or perform the reciprocal operation. Such operations may be conducted as part of various multiplexing schemes. As illustrated, the mux/demux unit 608 is functionally coupled to the one or more receivers/transmitters 604 and can permit processing of signals in time and frequency domain. In one aspect, the mux/demux unit 608 can multiplex and demultiplex information (e.g., data, metadata, and/or signaling) according to various multiplexing schemes such as time division multiplexing (TDM), frequency division multiplexing (FDM), orthogonal frequency division multiplexing (OFDM), code division multiplexing (CDM), space division multiplexing (SDM). In addition or in the alternative, in another aspect, the mux/demux unit 608 can scramble and spread information (e.g., codes) according to most any code, such as Hadamard-Walsh codes, Baker codes, Kasami codes, polyphase codes, and the like. The modem 616 can modulate and demodulate information (e.g., data, metadata, signaling, or a combination thereof) according to various modulation techniques, such as OFDMA, ODCA, EDCA, frequency modulation (e.g., frequency-shift keying), amplitude modulation (e.g., M-ary quadrature amplitude modulation (QAM), with M a positive integer; amplitude-shift keying (ASK)), phase-shift keying (PSK), and the like). In addition, processor(s) that can be included in the computing device 510 (e.g., processor(s) included in the radio unit 514 or other functional element(s) of the computing device 510) can permit processing data (e.g., symbols, bits, or chips) for multiplexing/demultiplexing, modulation/demodulation (such as implementing direct and inverse fast Fourier transforms) selection of modulation rates, selection of data packet formats, inter-packet times, and the like.

The codec 612 can operate on information (e.g., data, metadata, signaling, or a combination thereof) in accordance with one or more coding/decoding schemes suitable for communication, at least in part, through the one or more transceivers formed from respective transmitter(s)/receiver(s) 604. In one aspect, such coding/decoding schemes, or related procedure(s), can be retained as a group of one or more computer-accessible instructions (computer-readable instructions, computer-executable instructions, or a combination thereof) in one or more memory devices 534 (referred to as memory 534). In a scenario in which wireless communication among the computing device 510 and another computing device (e.g., an access point 110, a wireless station 120, a station and/or other types of user equipment) utilizes MU-MIMI, MIMO, MISO, SIMO, or SISO operation, the codec 612 can implement at least one of space-time block coding (STBC) and associated decoding, or space-frequency block (SFBC) coding and associated decoding. In addition or in the alternative, the codec 612 can extract information from data streams coded in accordance with spatial multiplexing scheme. In one aspect, to decode received information (e.g., data, metadata, signaling, or a combination thereof), the codec 612 can implement at least one of computation of log-likelihood ratios (LLR) associated with constellation realization for a specific demodulation; maximal ratio combining (MRC) filtering, maximum-likelihood (ML) detection, successive interference cancellation (SIC) detection, zero forcing (ZF) and minimum mean square error estimation (MMSE) detection, or the like. The codec 612 can utilize, at least in part, mux/demux component 608 and mod/demod component 616 to operate in accordance with aspects described herein.

The computing device 510 can operate in a variety of wireless environments having wireless signals conveyed in different electromagnetic radiation (EM) frequency bands and/or subbands. To at least such end, the multi-mode communication processing unit 518 in accordance with aspects of the disclosure can process (code, decode, format, etc.) wireless signals within a set of one or more EM frequency bands (also referred to as frequency bands) comprising one or more of radio frequency (RF) portions of the EM spectrum, microwave portion(s) of the EM spectrum, or infrared (IR) portion of the EM spectrum. In one aspect, the set of one or more frequency bands can include at least one of (i) all or most licensed EM frequency bands, (such as the industrial, scientific, and medical (ISM) bands, including the 2.4 GHz band or the 5 GHz bands); or (ii) all or most unlicensed frequency bands (such as the 60 GHz band) currently available for telecommunication.

The computing device 510 can receive and/or transmit information encoded and/or modulated or otherwise processed in accordance with aspects of the present disclosure. To at least such an end, in certain embodiments, the computing device 510 can acquire or otherwise access information, wirelessly via the radio unit 514 (also referred to as radio 514), where at least a portion of such information can be encoded and/or modulated in accordance with aspects described herein. More specifically, for example, the information can include data packets and/or physical layer headers (e.g., preambles and included information such as allocation information), a signal, and/or the like in accordance with embodiments of the disclosure, such as those shown in FIGS. 1-3.

The memory 534 can contain one or more memory elements having information suitable for processing information received according to a predetermined communication protocol (e.g., IEEE 802.11ac or IEEE 802.11ax). While not shown, in certain embodiments, one or more memory elements of the memory 534 can include computer-accessible instructions that can be executed by one or more of the functional elements of the computing device 510 in order to implement at least some of the functionality for applying random backoff techniques to random access using OFDMA technologies as described herein, including processing of information communicated (e.g., encoded, modulated, and/or arranged) in accordance with aspect of the disclosure. One or more groups of such computer-accessible instructions can embody or can constitute a programming interface that can permit communication of information (e.g., data, metadata, and/or signaling) between functional elements of the computing device 510 for implementation of such functionality.

In addition, in the illustrated computing device 500, a bus architecture 542 (also referred to as bus 542) can permit the exchange of information (e.g., data, metadata, and/or signaling) between two or more of (i) the radio unit 514 or a functional element therein, (ii) at least one of the I/O interface(s) 522, (iii) the communication unit 526, or (iv) the memory 534. In addition, one or more application programming interfaces (APIs) (not depicted in FIG. 5) or other types of programming interfaces that can permit exchange of information (e.g., trigger frames, streams, data packets, allocation information, data and/or metadata) between two or more of the functional elements of the client device 510. At least one of such API(s) can be retained or otherwise stored in the memory 534. In certain embodiments, it should be appreciated that at least one of the API(s) or other programming interfaces can permit the exchange of information within components of the communication unit 526. The bus 542 also can permit a similar exchange of information.

FIG. 7 illustrates an example of a computational environment 700 for applying random backoff techniques to random access using OFDMA technologies as in accordance with one or more aspects of the disclosure. The example computational environment 700 is only illustrative and is not intended to suggest or otherwise convey any limitation as to the scope of use or functionality of such computational environments' architecture. In addition, the computational environment 700 should not be interpreted as having any dependency or requirement relating to any one or combination of components illustrated in this example computational environment. The illustrative computational environment 700 can embody or can include, for example, the computing device 510, an access point 110, a wireless station 120, and/or any other computing device that can implement or otherwise leverage the random backoff techniques described herein.

The computational environment 700 represents an example of a software implementation of the various aspects or features of the disclosure in which the processing or execution of operations described in connection with random backoff techniques described herein, including processing of information communicated (e.g., encoded, modulated, and/or arranged) in accordance with this disclosure, can be performed in response to execution of one or more software components at the computing device 710. It should be appreciated that the one or more software components can render the computing device 710, or any other computing device that contains such components, a particular machine for random backoff techniques described herein, including processing of information encoded, modulated, and/or arranged in accordance with aspects described herein, among other functional purposes. A software component can be embodied in or can comprise one or more computer-accessible instructions, e.g., computer-readable and/or computer-executable instructions. At least a portion of the computer-accessible instructions can embody one or more of the example techniques disclosed herein. For instance, to embody one such method, at least the portion of the computer-accessible instructions can be persisted (e.g., stored, made available, or stored and made available) in a computer storage non-transitory medium and executed by a processor. The one or more computer-accessible instructions that embody a software component can be assembled into one or more program modules, for example, that can be compiled, linked, and/or executed at the computing device 710 or other computing devices. Generally, such program modules comprise computer code, routines, programs, objects, components, information structures (e.g., data structures and/or metadata structures), etc., that can perform particular tasks (e.g., one or more operations) in response to execution by one or more processors, which can be integrated into the computing device 710 or functionally coupled thereto.

The various example embodiments of the disclosure can be operational with numerous other general purpose or special purpose computing system environments or configurations. Examples of well-known computing systems, environments, and/or configurations that can be suitable for implementation of various aspects or features of the disclosure in connection with random backoff techniques, including processing of information communicated (e.g., encoded, modulated, and/or arranged) in accordance with features described herein, can comprise personal computers; server computers; laptop devices; handheld computing devices, such as mobile tablets; wearable computing devices; and multiprocessor systems. Additional examples can include set top boxes, programmable consumer electronics, network PCs, minicomputers, mainframe computers, blade computers, programmable logic controllers, distributed computing environments that comprise any of the above systems or devices, and the like.

As illustrated, the computing device 710 can comprise one or more processors 714, one or more input/output (I/O) interfaces 716, a memory 730, and a bus architecture 732 (also termed bus 732) that functionally couples various functional elements of the computing device710. The bus 732 can include at least one of a system bus, a memory bus, an address bus, or a message bus, and can permit exchange of information (data, metadata, and/or signaling) between the processor(s) 714, the I/O interface(s) 716, and/or the memory 730, or respective functional element therein. In certain scenarios, the bus 732 in conjunction with one or more internal programming interfaces 750 (also referred to as interface(s) 750) can permit such exchange of information. In scenarios in which processor(s) 714 include multiple processors, the computing device 710 can utilize parallel computing.

The I/O interface(s) 716 can permit or otherwise facilitate communication of information between the computing device and an external device, such as another computing device, e.g., a network element or an end-user device. Such communication can include direct communication or indirect communication, such as exchange of information between the computing device 710 and the external device via a network or elements thereof. As illustrated, the I/O interface(s) 716 can comprise one or more of network adapter(s) 718, peripheral adapter(s) 722, and display unit(s) 726. Such adapter(s) can permit or facilitate connectivity between the external device and one or more of the processor(s) 714 or the memory 730. In one aspect, at least one of the network adapter(s) 718 can couple functionally the computing device 710 to one or more computing devices 770 via one or more traffic and signaling pipes 760 that can permit or facilitate exchange of traffic 762 and signaling 764 between the computing device 710 and the one or more computing devices 770. Such network coupling provided at least in part by the at least one of the network adapter(s) 718 can be implemented in a wired environment, a wireless environment, or both. The information that is communicated by the at least one network adapter can result from implementation of one or more operations in a method of the disclosure. Such output can be any form of visual representation, including, but not limited to, textual, graphical, animation, audio, tactile, and the like. In certain scenarios, each access point 110, wireless station 120, station, and/or other device can have substantially the same architecture as the computing device 710. In addition or in the alternative, the display unit(s) 726 can include functional elements (e.g., lights, such as light-emitting diodes; a display, such as liquid crystal display (LCD), combinations thereof, or the like) that can permit control of the operation of the computing device 710, or can permit conveying or revealing operational conditions of the computing device 710.

In one aspect, the bus 732 represents one or more of several possible types of bus structures, including a memory bus or memory controller, a peripheral bus, an accelerated graphics port, and a processor or local bus using any of a variety of bus architectures. As an illustration, such architectures can comprise an Industry Standard Architecture (ISA) bus, a Micro Channel Architecture (MCA) bus, an Enhanced ISA (EISA) bus, a Video Electronics Standards Association (VESA) local bus, an Accelerated Graphics Port (AGP) bus, and a Peripheral Component Interconnects (PCI) bus, a PCI-Express bus, a Personal Computer Memory Card Industry Association (PCMCIA) bus, Universal Serial Bus (USB), and the like. The bus 732, and all buses described herein can be implemented over a wired or wireless network connection and each of the subsystems, including the processor(s) 714, the memory 730 and memory elements therein, and the I/O interface(s) 716 can be contained within one or more remote computing devices 770 at physically separate locations, connected through buses of this form, in effect implementing a fully distributed system.

The computing device 710 can comprise a variety of computer-readable media. Computer readable media can be any available media (transitory and non-transitory) that can be accessed by a computing device. In one aspect, computer-readable media can comprise computer non-transitory storage media (or computer-readable non-transitory storage media) and communications media. Example computer-readable non-transitory storage media can be any available media that can be accessed by the computing device 710, and can comprise, for example, both volatile and non-volatile media, and removable and/or non-removable media. In one aspect, the memory 730 can comprise computer-readable media in the form of volatile memory, such as random access memory (RAM), and/or non-volatile memory, such as read only memory (ROM).

The memory 730 can comprise functionality instructions storage 734 and functionality information storage 738. The functionality instructions storage 734 can comprise computer-accessible instructions that, in response to execution (by at least one of the processor(s) 714), can implement one or more of the functionalities of the disclosure. The computer-accessible instructions can embody or can comprise one or more software components illustrated as backoff component(s) 736. In one scenario, execution of at least one component of the backoff component(s) 736 can implement one or more of the techniques disclosed herein. For instance, such execution can cause a processor that executes the at least one component to carry out a disclosed example method. It should be appreciated that, in one aspect, a processor of the processor(s) 714 that executes at least one of the backoff component(s) 736 can retrieve information from or retain information in a memory element 740 in the functionality information storage 738 in order to operate in accordance with the functionality programmed or otherwise configured by the backoff component(s) 736. Such information can include at least one of code instructions, information structures, or the like. At least one of the one or more interfaces 750 (e.g., application programming interface(s)) can permit or facilitate communication of information between two or more components within the functionality instructions storage 734. The information that is communicated by the at least one interface can result from implementation of one or more operations in a method of the disclosure. In certain embodiments, one or more of the functionality instructions storage 734 and the functionality information storage 738 can be embodied in or can comprise removable/non-removable, and/or volatile/non-volatile computer storage media.

At least a portion of at least one of the backoff component(s) 736 or backoff information 740 can program or otherwise configure one or more of the processors 714 to operate at least in accordance with the functionality described herein. One or more of the processor(s) 714 can execute at least one of such components and leverage at least a portion of the information in the storage 738 in order to provide random backoff techniques in accordance with one or more aspects described herein. More specifically, yet not exclusively, execution of one or more of the component(s) 736 can permit transmitting and/or receiving information at the computing device 710, where the at least a portion of the information includes one or more streams of trigger frames, as described in connection with FIGS. 1-3, for example.

It should be appreciated that, in certain scenarios, the functionality instruction(s) storage 734 can embody or can comprise a computer-readable non-transitory storage medium having computer-accessible instructions that, in response to execution, cause at least one processor (e.g., one or more of processor(s) 714) to perform a group of operations comprising the operations or blocks described in connection with the disclosed methods.

In addition, the memory 730 can comprise computer-accessible instructions and information (e.g., data and/or metadata) that permit or facilitate operation and/or administration (e.g., upgrades, software installation, any other configuration, or the like) of the computing device 710. Accordingly, as illustrated, the memory 730 can comprise a memory element 742 (labeled OS instruction(s) 742) that contains one or more program modules that embody or include one or more OSs, such as Windows operating system, Unix, Linux, Symbian, Android, Chromium, and substantially any OS suitable for mobile computing devices or tethered computing devices. In one aspect, the operational and/or architecture complexity of the computing device 710 can dictate a suitable OS. The memory 730 also comprises a system information storage 746 having data and/or metadata that permits or facilitate operation and/or administration of the computing device 710. Elements of the OS instruction(s) 742 and the system information storage 746 can be accessible or can be operated on by at least one of the processor(s) 714.

It should be recognized that while the functionality instructions storage 734 and other executable program components, such as the operating system instruction(s) 742, are illustrated herein as discrete blocks, such software components can reside at various times in different memory components of the computing device 710, and can be executed by at least one of the processor(s) 714. In certain scenarios, an implementation of the backoff component(s) 736 can be retained on or transmitted across some form of computer readable media.

The computing device 710 and/or one of the computing device(s) 770 can include a power supply (not shown), which can power up components or functional elements within such devices. The power supply can be a rechargeable power supply, e.g., a rechargeable battery, and it can include one or more transformers to achieve a power level suitable for operation of the computing device 710 and/or one of the computing device(s) 770, and components, functional elements, and related circuitry therein. In certain scenarios, the power supply can be attached to a conventional power grid to recharge and ensure that such devices can be operational. In one aspect, the power supply can include an I/O interface (e.g., one of the network adapter(s) 718) to connect operationally to the conventional power grid. In another aspect, the power supply can include an energy conversion component, such as a solar panel, to provide additional or alternative power resources or autonomy for the computing device 710 and/or one of the computing device(s) 770.

The computing device 710 can operate in a networked environment by utilizing connections to one or more remote computing devices 770. As an illustration, a remote computing device can be a personal computer, a portable computer, a server, a router, a network computer, a peer device or other common network node, and so on. As described herein, connections (physical and/or logical) between the computing device 710 and a computing device of the one or more remote computing devices 770 can be made via one or more traffic and signaling pipes 760, which can comprise wireline link(s) and/or wireless link(s) and several network elements (such as routers or switches, concentrators, servers, and the like) that form a local area network (LAN) and/or a wide area network (WAN). Such networking environments are conventional and commonplace in dwellings, offices, enterprise-wide computer networks, intranets, local area networks, and wide area networks.

FIG. 8 presents another example embodiment 800 of a computing device 810 in accordance with one or more embodiments of the disclosure. In certain implementations, the computing device 810 can be a HEW-compliant device that may be configured to communicate with one or more other HEW devices and/or other types of communication devices, such as legacy communication devices. HEW devices and legacy devices also may be referred to as HEW stations (STAs) and legacy STAs, respectively. In one implementation, the computing device 810 can operate as an access point 110, a wireless station 120, and/or another device. As illustrated, the computing device 810 can include, among other things, physical layer (PHY) circuitry 820 and medium-access-control layer (MAC) circuitry 830. In one aspect, the PHY circuitry 810 and the MAC circuitry 830 can be HEW compliant layers and also can be compliant with one or more legacy IEEE 802.11 standards. In one aspect, the MAC circuitry 1030 can be arranged to configure physical layer converge protocol (PLCP) protocol data units (PPDUs) and arranged to transmit and receive PPDUs, among other things. In addition or in other embodiments, the computing device 810 also can include other hardware processing circuitry 840 (e.g., one or more processors) and one or more memory devices 850 configured to perform the various operations described herein.

In certain embodiments, the MAC circuitry 830 can be arranged to contend for a wireless medium during a contention period to receive control of the medium for the HEW control period and configure an HEW PPDU. In addition or in other embodiments, the PHY 820 can be arranged to transmit the HEW PPDU. The PHY circuitry 820 can include circuitry for modulation/demodulation, upconversion/downconversion, filtering, amplification, etc. As such, the computing device 810 can include a transceiver to transmit and receive data such as HEW PPDU. In certain embodiments, the hardware processing circuitry 840 can include one or more processors. The hardware processing circuitry 840 can be configured to perform functions based on instructions being stored in a memory device (e.g., RAM or ROM) or based on special purpose circuitry. In certain embodiments, the hardware processing circuitry 840 can be configured to perform one or more of the functions described herein, such as activating and/or deactivating different back-off count procedures, allocating bandwidth, and/or the like.

In certain embodiments, one or more antennas may be coupled to or included in the PHY circuitry 820. The antenna(s) can transmit and receive wireless signals, including transmission of HEW packets. As described herein, the one or more antennas can include one or more directional or omnidirectional antennas, including dipole antennas, monopole antennas, patch antennas, loop antennas, microstrip antennas or other types of antennas suitable for transmission of RF signals. In scenarios in which MIMO communication is utilized, the antennas may be physically separated to leverage spatial diversity and the different channel characteristics that may result.

The memory 850 can retain or otherwise store information for configuring the other circuitry to perform operations for configuring and transmitting HEW packets and performing the various operations described herein including the allocation of and using of bandwidth (AP) and using the allocation of the bandwidth (STA).

The computing device 810 can be configured to communicate using OFDM communication signals over a multicarrier communication channel. More specifically, in certain embodiments, the computing device 810 can be configured to communicate in accordance with one or more specific radio technology protocols, such as the IEEE family of standards including IEEE 802.11-2012, IEEE 802.11n-2009, IEEE 802.11ac-2013, IEEE 802.11ax, DensiFi, and/or proposed specifications for WLANs. In one of such embodiments, the computing device 810 can utilize or otherwise rely on symbols having a duration that is four times the symbol duration of IEEE 802.1In and/or IEEE 802.11ac. It should be appreciated that the disclosure is not limited in this respect and, in certain embodiments, the computing device 810 also can transmit and/or receive wireless communications in accordance with other protocols and/or standards.

The computing device 810 can be embodied in or can constitute a portable wireless communication device, such as a personal digital assistant (PDA), a laptop or portable computer with wireless communication capability, a web tablet, a wireless telephone, a smartphone, a wireless headset, a pager, an instant messaging device, a digital camera, an access point, a television, a medical device (e.g., a heart rate monitor, a blood pressure monitor, etc.), an access point, a base station, a transmit/receive device for a wireless standard such as IEEE 802.11 or IEEE 802.16, or other types of communication device that may receive and/or transmit information wirelessly. Similarly to the computing device 710, the computing device 810 can include, for example, one or more of a keyboard, a display, a non-volatile memory port, multiple antennas, a graphics processor, an application processor, speakers, and other mobile device elements. The display may be an LCD screen including a touch screen.

It should be appreciated that while the computing device 810 is illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In certain embodiments, the functional elements may refer to one or more processes operating or otherwise executing on one or more processors.

The operations and processes described and shown above may be carried out or performed in any suitable order as desired in various implementations. Additionally, in certain implementations, at least a portion of the operations may be carried out in parallel. Furthermore, in certain implementations, less than or more than the operations described may be performed.

The word "exemplary" is used herein to mean "serving as an example, instance, or illustration." Any embodiment described herein as "exemplary" is not necessarily to be construed as preferred or advantageous over other embodiments. The terms "computing device", "user device", "communication station", "station", "handheld device", "mobile device", "wireless device" and "user equipment" (UE) as used herein refers to a wireless communication device such as a cellular telephone, smartphone, tablet, netbook, wireless terminal, laptop computer, a femtocell, High Data Rate (HDR) subscriber station, access point, printer, point of sale device, access terminal, or other personal communication system (PCS) device. The device may be either mobile or stationary .

As used within this document, the term "communicate" is intended to include transmitting, or receiving, or both transmitting and receiving. This may be particularly useful in claims when describing the organization of data that is being transmitted by one device and received by another, but only the functionality of one of those devices is required to infringe the claim. Similarly, the bidirectional exchange of data between two devices (both devices transmit and receive during the exchange) may be described as 'communicating', when only the functionality of one of those devices is being claimed. The term "communicating" as used herein with respect to a wireless communication signal includes transmitting the wireless communication signal and/or receiving the wireless communication signal. For example, a wireless communication unit, which is capable of communicating a wireless communication signal, may include a wireless transmitter to transmit the wireless communication signal to at least one other wireless communication unit, and/or a wireless communication receiver to receive the wireless communication signal from at least one other wireless communication unit.

The term "access point" (AP) as used herein may be a fixed station. An access point may also be referred to as an access node, a base station, or some other similar terminology known in the art. An access terminal may also be called a mobile station, user equipment (UE), a wireless communication device, or some other similar terminology known in the art. Embodiments disclosed herein generally pertain to wireless networks. Some embodiments may relate to wireless networks that operate in accordance with one of the IEEE 802.11 standards.

Some embodiments may be used in conjunction with various devices and systems, for example, a Personal Computer (PC), a desktop computer, a mobile computer, a laptop computer, a notebook computer, a tablet computer, a server computer, a handheld computer, a handheld device, a Personal Digital Assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless Access Point (AP), a wired or wireless router, a wired or wireless modem, a video device, an audio device, an audio-video (A/V) device, a wired or wireless network, a wireless area network, a Wireless Video Area Network (WVAN), a Local Area Network (LAN), a Wireless LAN (WLAN), a Personal Area Network (PAN), a Wireless PAN (WPAN), and the like.

Some embodiments may be used in conjunction with one way and/or two-way radio communication systems, cellular radio-telephone communication systems, a mobile phone, a cellular telephone, a wireless telephone, a Personal Communication Systems (PCS) device, a PDA device which incorporates a wireless communication device, a mobile or portable Global Positioning System (GPS) device, a device which incorporates a GPS receiver or transceiver or chip, a device which incorporates an RFID element or chip, a Multiple Input Multiple Output (MIMO) transceiver or device, a Single Input Multiple Output (SIMO) transceiver or device, a Multiple Input Single Output (MISO) transceiver or device, a device having one or more internal antennas and/or external antennas, Digital Video Broadcast (DVB) devices or systems, multi-standard radio devices or systems, a wired or wireless handheld device, e.g., a Smartphone, a Wireless Application Protocol (WAP) device, or the like.

Some embodiments may be used in conjunction with one or more types of wireless communication signals and/or systems following one or more wireless communication protocols, for example, Radio Frequency (RF), Infra Red (IR), Frequency-Division Multiplexing (FDM), Orthogonal FDM (OFDM), Time-Division Multiplexing (TDM), Time-Division Multiple Access (TDMA), Extended TDMA (E-TDMA), General Packet Radio Service (GPRS), extended GPRS, Code-Division Multiple Access (CDMA), Wideband CDMA (WCDMA), CDMA 2000, single-carrier CDMA, multi-carrier CDMA, Multi-Carrier Modulation (MDM), Discrete Multi-Tone (DMT), Bluetooth®, Global Positioning System (GPS), Wi-Fi, Wi-Max, ZigBeeTM, Ultra-Wideband (UWB), Global System for Mobile communication (GSM), 2G, 2.5G, 3G, 3.5G, 4G, Fifth Generation (5G) mobile networks, 3GPP, Long Term Evolution (LTE), LTE advanced, Enhanced Data rates for GSM Evolution (EDGE), or the like. Other embodiments may be used in various other devices, systems, and/or networks.

### EXAMPLE EMBODIMENTS

In accordance with example embodiments of the disclosure, there may be one or more non-transitory computer readable media including instructions stored thereon, which when executed by one or more processor(s) of a wireless communication station, cause a device to perform operations including, receiving, at the wireless communication station, one or more trigger frames from an access point, wherein each of the one or more trigger frames comprises allocation information for a transmission, causing to execute a first transmission attempt of data at the wireless communication station using a first transmission method, determining the first transmission attempt of the data is unsuccessful, causing to execute one or more retransmission attempts of the data at the wireless communication station using the first transmission method, determining the one or more retransmission attempts of the data are unsuccessful, determining a number of unsuccessful retransmission attempts of the data has met or exceeded a threshold, and causing to activate a second transmission method at the wireless communication station for executing a second transmission attempt of the data. In example embodiments, activating the second transmission method may further include selecting a back-off count value for the wireless communication station, wherein the back-off count value is an integer greater than zero that is selected at random, assigning the back-off count value to the wireless communication station, decrementing the back-off count value by one for identification of each random access-enabled resource unit comprised in the one or more trigger frames received from the access point, and causing to execute the second transmission attempt of the data using the second transmission method when the back-off count value reaches zero. In yet further example embodiments, using the second transmission method may include selecting a random-access-enabled resource unit when the back-off count value reaches zero, wherein the random-access-enabled resource unit is selected at random selecting a predetermined random-access-enabled resource unit when the back-off count value reaches zero selecting a next-available random-access-enabled resource unit when the back-off count value reaches zero, and wherein at least one of the randomly-selected random-access-enabled resource unit, the predetermined random-access-enabled resource unit, and the next-available random-access-enabled resource unit is utilized during execution of the second transmission attempt of the data. In yet further example embodiments, the second transmission method may be deactivated based on receiving from the access point an acknowledgement of a successful transmission, and wherein deactivating second transmission method comprises reactivating the first transmission method. In yet further example embodiments, activating the second transmission method may still further include comparing the determined number of unsuccessful retransmission attempts of the data to predetermined threshold value of retransmission attempts, and determining that the determined number of unsuccessful retransmission attempts of the data is greater than or equal to the predetermined threshold value of retransmission attempts. In yet further example embodiments, the second transmission method may be activated in response to receiving one or more trigger frames from the access point, wherein the one or more trigger frames comprise at least one random access-enabled resource units. In yet further example embodiments, the second transmission method may be deactivated based on receiving an acknowledgement from the access point indicating that a transmission transmitted to the access point using the first transmission method was successful. In yet further example embodiments, both the first transmission method and the second transmission method may be activated for executing one or more retransmission attempts of the data.

In accordance with example embodiments of the disclosure, there may be a method including, receiving, by a computing device processor of a wireless communication station, one or more trigger frames from an access point, wherein each of the one or more trigger frames comprises allocation information for a transmission, executing, by the computing device processor, a first transmission attempt of data using a first transmission method, determining, by the computing device processor, the first transmission attempt of the data is unsuccessful, executing, by the computing device processor, one or more retransmission attempts of the data using the first transmission method, determining, by the computing device processor, the one or more retransmission attempts of the data are unsuccessful, determining, by the computing device processor, a number of unsuccessful retransmission attempts of the data has met or exceeded a threshold, and activating, by the computing device processor, a second transmission method for executing a second transmission attempt of the data. In yet further example embodiments, activating the second transmission method may further comprise randomly selecting, by the computing device processor, a back-off count value for the wireless communication station, wherein the back-off count value is an integer greater than zero, assigning, by the computing device processor, the back-off count value to the wireless communication station, decrementing, by the computing device processor, the back-off count value by one for identification of each random access-enabled resource unit comprised in the one or more trigger frames received from the access point, and executing, by the computing device processor, a second transmission attempt of the data using the second transmission method when the back-off count value reaches zero. In yet further example embodiments, the method may further comprise selecting, by the computing device processor, a random-access-enabled resource unit when the back-off count value reaches zero, wherein the random-access-enabled resource unit is selected at random, selecting, by the computing device processor, a predetermined random-access-enabled resource unit when the back-off count value reaches zero, selecting, by the computing device processor, a next-available random-access-enabled resource unit when the back-off count value reaches zero, and wherein at least one of the randomly-selected random-access-enabled resource unit, the predetermined random-access-enabled resource unit, and the next-available random-access-enabled resource unit is utilized during execution of the second transmission attempt of the data. In yet further example embodiments, the second transmission method may be deactivated based on receiving from the access point an acknowledgement of a successful transmission, and wherein deactivating second transmission method comprises reactivating the first transmission method. In yet further example embodiments, activating the second transmission method may still further include comparing, by the computing device processor, the determined number of unsuccessful retransmission attempts of the data to predetermined threshold value of retransmission attempt, and determining, by the computing device processor, that the determined number of unsuccessful retransmission attempts of the data is greater than or equal to the predetermined threshold value of retransmission attempts. In yet further example embodiments, the second transmission method may be activated in response to receiving one or more trigger frames from the access point, wherein the one or more trigger frames comprise at least one random access-enabled resource units. In yet further example embodiments, the method may further include deactivating the second transmission method based on receiving an acknowledgement from the access point indicating that a transmission transmitted to the access point using the first transmission method was successful. In yet further example embodiments, both the first transmission method and the second transmission method may be activated for executing one or more retransmission attempts of the data.

In accordance with an example embodiment of the disclosure, there may be a computing device, including one or more processors in communication with the transceiver, at least one memory that stores computer-executable instructions, at least one processor of the one or more processors configured to access the at least one memory, wherein the at least one processor of the one or more processors is configured to execute the computer-executable instructions to, receiving one or more trigger frames from an access point, wherein each of the one or more trigger frames comprises allocation information for transmission of data, executing a first transmission attempt of the data at the wireless communication station using a first transmission method, determining the first transmission attempt of the data is unsuccessful, executing one or more retransmission attempts of the data at the wireless communication station using the first transmission method, determining the one or more retransmission attempts of the data are unsuccessful, determining a number of unsuccessful retransmission attempts of the data has met or exceeded a threshold, and activating a second transmission method at the wireless communication station for executing a second transmission attempt of the data. In yet further example embodiments, activating the second transmission method may further include selecting a back-off count value for the wireless communication station, wherein the back-off count value is an integer greater than zero and the back-off count value is selected at random assigning the back-off count value to the wireless communication station, decrementing the back-off count value by one for identification of each random access-enabled resource unit comprised in the one or more trigger frames received from the access point, and executing the second transmission attempt of the data using the second transmission method when the back-off count value reaches zero. In yet further example embodiments, the at least one processor of the one or more processors may further be configured to execute the computer-executable instructions to, select a random-access-enabled resource unit when the back-off count value reaches zero, wherein the random-access-enabled resource unit is selected at random, select a predetermined random-access-enabled resource unit when the back-off count value reaches zero select a next-available random-access-enabled resource unit when the back-off count value reaches zero, and wherein at least one of the randomly-selected random-access-enabled resource unit, the predetermined random-access-enabled resource unit, and the next-available random-access-enabled resource unit is utilized during execution of the second transmission attempt of the data. In yet further example embodiments, the second transmission method may be deactivated based on receiving from the access point an acknowledgement of a successful transmission of the data, and wherein deactivating second transmission method comprises reactivating the first transmission method.

Certain aspects of the disclosure are described above with reference to block and flow diagrams of systems, methods, apparatuses, and/or computer program products according to various implementations. It will be understood that one or more blocks of the block diagrams and flow diagrams, and combinations of blocks in the block diagrams and the flow diagrams, respectively, can be implemented by computer-executable program instructions. Likewise, some blocks of the block diagrams and flow diagrams may not necessarily need to be performed in the order presented, or may not necessarily need to be performed at all, according to some implementations.

These computer-executable program instructions may be loaded onto a special-purpose computer or other particular machine, a processor, or other programmable data processing apparatus to produce a particular machine, such that the instructions that execute on the computer, processor, or other programmable data processing apparatus create means for implementing one or more functions specified in the flow diagram block or blocks. These computer program instructions may also be stored in a computer-readable storage media or memory that can direct a computer or other programmable data processing apparatus to function in a particular manner, such that the instructions stored in the computer-readable storage media produce an article of manufacture including instruction means that implement one or more functions specified in the flow diagram block or blocks. As an example, certain implementations may provide for a computer program product, comprising a computer-readable storage medium having a computer-readable program code or program instructions implemented therein, said computer-readable program code adapted to be executed to implement one or more functions specified in the flow diagram block or blocks. The computer program instructions may also be loaded onto a computer or other programmable data processing apparatus to cause a series of operational elements or steps to be performed on the computer or other programmable apparatus to produce a computer-implemented process such that the instructions that execute on the computer or other programmable apparatus provide elements or steps for implementing the functions specified in the flow diagram block or blocks.

Accordingly, blocks of the block diagrams and flow diagrams support combinations of means for performing the specified functions, combinations of elements or steps for performing the specified functions and program instruction means for performing the specified functions. It will also be understood that each block of the block diagrams and flow diagrams, and combinations of blocks in the block diagrams and flow diagrams, can be implemented by special-purpose, hardware-based computer systems that perform the specified functions, elements or steps, or combinations of special-purpose hardware and computer instructions.

Conditional language, such as, among others, "can," "could," "might," or "may," unless specifically stated otherwise, or otherwise understood within the context as used, is generally intended to convey that certain implementations could include, while other implementations do not include, certain features, elements, and/or operations. Thus, such conditional language is not generally intended to imply that features, elements, and/or operations are in any way required for one or more implementations or that one or more implementations necessarily include logic for deciding, with or without user input or prompting, whether these features, elements, and/or operations are included or are to be performed in any particular implementation.

Many modifications and other implementations of the disclosure set forth herein will be apparent having the benefit of the teachings presented in the foregoing descriptions and the associated drawings. Therefore, it is to be understood that the disclosure is not to be limited to the specific implementations disclosed and that modifications and other implementations are intended to be included within the scope of the appended claims. Although specific terms are employed herein, they are used in a generic and descriptive sense only and not for purposes of limitation.

## Claims

1. A non-transitory computer readable medium including instructions stored thereon, which when executed by one or more processor(s) of a wireless communication station, cause a device to perform operations of:
receiving (410), at the wireless communication station (120), one or more trigger frames from an access point, wherein each of the one or more trigger frames comprises allocation information for a transmission;
causing to execute (420) a first transmission attempt of data at the wireless communication station using a first transmission method and using the allocation information;
determining (420) the first transmission attempt of the data is unsuccessful;
causing to execute (430) one or more retransmission attempts of the data at the wireless communication station using the first transmission method and using the allocation information;
determining (440) the one or more retransmission attempts of the data are unsuccessful;
determining (450) a number of unsuccessful retransmission attempts of the data has met or exceeded a threshold; and
causing to activate (450) a second transmission method at the wireless communication station for executing a second transmission attempt of the data using the allocation information, wherein activating the second transmission method comprises:
selecting a back-off count value (320, 330, 340, 360, 370) for the wireless communication station, wherein the back-off count value is an integer greater than zero that is selected at random;
assigning the back-off count value to the wireless communication station (120);
decrementing the back-off count value by one for identification of each random access-enabled resource unit comprised in the one or more trigger frames received from the access point; and
causing to execute the second transmission attempt of the data using the second transmission method when the back-off count value reaches zero.

2. The non-transitory computer readable medium of claim 1, wherein using the second transmission method comprises at least one of:
selecting a random-access-enabled resource unit when the back-off count value reaches zero, wherein the random-access-enabled resource unit is selected at random;
selecting a predetermined random-access-enabled resource unit when the back-off count value reaches zero; and
selecting a next-available random-access-enabled resource unit when the back-off count value reaches zero; and
wherein at least one of the randomly-selected random-access-enabled resource unit, the predetermined random-access-enabled resource unit, and the next-available random* access-enabled resource unit is utilized during execution of the second transmission attempt of the data.

3. The non-transitory computer readable medium of claim 1, wherein the second transmission method is deactivated based on receiving from the access point an acknowledgement of a successful transmission, and wherein deactivating second transmission method comprises reactivating the first transmission method.

4. The non-transitory computer readable medium of claim 1, wherein activating the second transmission method comprises:
comparing the determined number of unsuccessful retransmission attempts of the data to predetermined threshold value of retransmission attempts; and
determining that the determined number of unsuccessful retransmission attempts of the data is greater than or equal to the predetermined threshold value of retransmission attempts.

5. The non-transitory computer readable medium of claim 1, wherein the second transmission method is activated in response to receiving one or more trigger frames from the access point, wherein the one or more trigger frames comprise at least one random access-enabled resource units.

6. The non-transitory computer readable medium of claim 1, wherein the second transmission method is deactivated based on receiving an acknowledgement from the access point indicating that a transmission transmitted to the access point using the first transmission method was successful.

7. The non-transitory computer readable medium of claim 1, wherein both the first transmission method and the second transmission method are activated for executing one or more retransmission attempts of the data.

8. A method comprising:
receiving (410), by a computing device processor of a wireless communication station, one or more trigger frames from an access point, wherein each of the one or more trigger frames comprises allocation information for a transmission;
executing (420), by the computing device processor, a first transmission attempt of data using a first transmission method and using the allocation information;
determining (420), by the computing device processor, the first transmission attempt of the data is unsuccessful;
executing (430), by the computing device processor, one or more retransmission attempts of the data using the first transmission method and using the allocation information;
determining (440), by the computing device processor, the one or more retransmission attempts of the data are unsuccessful;
determining (440), by the computing device processor, a number of unsuccessful retransmission attempts of the data has met or exceeded a threshold; and
activating (450), by the computing device processor, a second transmission method for executing a second transmission attempt of the data using the allocation information,
wherein activating the second transmission method comprises:
randomly selecting, by the computing device processor, a back-off count value (320, 330, 340, 360, 370) for the wireless communication station, wherein the back-off count value is an integer greater than zero;
assigning, by the computing device processor, the back-off count value to the wireless communication station;
decrementing, by the computing device processor, the back-off count value by one for identification of each random access-enabled resource unit comprised in the one or more trigger frames received from the access point; and
executing, by the computing device processor, a second transmission attempt of the data using the second transmission method when the back-off count value reaches zero.

9. The method of claim 8, further comprising:
selecting, by the computing device processor, a random-access-enabled resource unit when the back-off count value reaches zero, wherein the random-access-enabled resource unit is selected at random;
selecting, by the computing device processor, a predetermined random-access-enabled resource unit when the back-off count value reaches zero; and
selecting, by the computing device processor, a next-available random-access-enabled resource unit when the back-off count value reaches zero; and
wherein at least one of the randomly-selected random-access-enabled resource unit, the predetermined random-access-enabled resource unit, and the next-available random-access-enabled resource unit is utilized during execution of the second transmission attempt of the data.

10. The method of claim 8, wherein the second transmission method is deactivated based on receiving rom the access point an acknowledgement of a successful transmission, and wherein deactivating second transmission method comprises reactivating the first transmission method.

11. The method of claim 8, wherein activating the second transmission method comprises:
comparing, by the computing device processor, the determined number of unsuccessful retransmission attempts of the data to predetermined threshold value of retransmission attempts; and
determining, by the computing device processor, that the determined number of unsuccessful retransmission attempts of the data is greater than or equal to the predetermined threshold value of retransmission attempts.

12. The method of claim 8, wherein the second transmission method is activated in response to receiving one or more trigger frames from the access point, wherein the one or more trigger frames comprise at least one random access-enabled resource units.

13. The method of claim 8, further comprising:
deactivating the second transmission method based on receiving an acknowledgement from the access point indicating that a transmission transmitted to the access point using the first transmission method was successful.

## Patentansprüche

1. Nichtflüchtiges computerlesbares Medium, in dem Befehle gespeichert sind, die wenn sie von einem oder mehreren Prozessor(en) einer drahtlosen Kommunikationsstation ausgeführt werden, eine Vorrichtung veranlassen, die folgenden Operationen auszuführen:
Empfangen (410), in der drahtlosen Kommunikationsstation (120), eines oder mehrerer Trigger-Frames von einem Zugangspunkt, wobei Jeder des einen oder der mehreren Trigger-Frames Zuteilungsinformationen für eine Übertragung umfasst;
Veranlassen eines Ausführens (420) eines ersten Übertragungsversuchs von Daten in der drahtlosen Kommunikationsstation mithilfe eines ersten Übertragungsverfahrens und mithilfe der Zuteilungsinformationen;
Ermitteln (420), dass der erste Übertragungsversuch der Daten nicht erfolgreich war;
Veranlassen eines Ausführens (430) eines oder mehrerer Neuübertragungsversuche der Daten in der drahtlosen Kommunikationsstation mithilfe eines ersten Übertragungsverfahrens und mithilfe der Zuteilungsinformationen;
Ermitteln (440), dass der eine oder die mehreren Neuübertragungsversuche der Daten nicht erfolgreich waren;
Ermitteln (450), dass eine Anzahl von nicht erfolgreichen Neuübertragungsversuchen der Daten einen Schwellenwert erreicht oder überschritten hat; und
Veranlassen eines Aktivierens (450) eines zweiten Übertragungsverfahrens in der drahtlosen Kommunikationsstation zum Ausführen eines zweiten Übertragungsversuchs der Daten mithilfe der Zuteilungsinformationen, wobei das Aktivieren des zweiten Übertragungsverfahrens umfasst:
Auswählen eines Rückzählwerts (320, 330, 340, 360, 370) für die drahtlose Kommunikationsstation, wobei der Rückzählwert eine ganze Zahl größer als Null ist, der zufällig ausgewählt wird;
Zuweisen des Rückzählwerts zu der drahtlosen Kommunikationsstation (120);
Verringern des Rückzählwerts um Eins zum Identifizieren jeder durch einen Zufallszugriff aktivierten Ressourceneinheit, die in dem einen oder den mehreren Trigger-Frames enthalten ist, die von dem Zugangspunkt empfangen werden; und
Veranlassen eines Ausführens des zweiten Übertragungsversuchs der Daten mithilfe des zweiten Übertragungsverfahrens, wenn der Rückzählwert Null erreicht.

2. Nichtflüchtiges computerlesbares Medium nach Anspruch 1, wobei das Verwenden des zweiten Übertragungsverfahrens mindestens einen der folgenden Schritte umfasst:
Auswählen einer durch einen Zufallszugriff aktivierten Ressourceneinheit, wenn der Rückzählwert Null erreicht, wobei die durch einen Zufallszugriff aktivierte Ressourceneinheit zufällig ausgewählt wird;
Auswählen einer vorbestimmten, durch einen Zufallszugriff aktivierten Ressourceneinheit, wenn der Rückzählwert Null erreicht; und
Auswählen einer als Nächste zur Verfügung stehenden, durch einen Zufallszugriff aktivierten Ressourceneinheit, wenn der Rückzählwert Null erreicht; und
wobei mindestens Eine der zufällig ausgewählten durch einen Zufallszugriff aktivierten Ressourceneinheit, der vorbestimmten, durch einen Zufallszugriff aktivierten Ressourceneinheit und der als Nächste zur Verfügung stehenden, durch einen Zufallszugriff aktivierten Ressourceneinheit während des Ausführens des zweiten Übertragungsversuchs der Daten verwendet wird.

3. Nichtflüchtiges computerlesbares Medium nach Anspruch 1, wobei das zweite Übertragungsverfahren aufgrund eines Empfangens einer Bestätigung einer erfolgreichen Übertragung von dem Zugangspunkt deaktiviert wird und wobei das Deaktivieren des zweiten Übertragungsverfahrens ein Neuaktivieren des ersten Übertragungsverfahrens umfasst.

4. Nichtflüchtiges computerlesbares Medium nach Anspruch 1, wobei das Aktivieren des zweiten Übertragungsverfahrens umfasst:
Vergleichen der ermittelten Anzahl von nicht erfolgreichen Neuübertragungsversuchen der Daten mit einem vorbestimmten Schwellenwert für die Neuübertragungsversuche; und
Ermitteln, dass die ermittelte Anzahl von nicht erfolgreichen Neuübertragungsversuchen der Daten größer als der, oder gleich dem vorbestimmten Schwellenwert für die Neuübertragungsversuche ist.

5. Nichtflüchtiges computerlesbares Medium nach Anspruch 1, wobei das zweite Übertragungsverfahren als Reaktion auf ein Empfangen eines oder mehrerer Trigger-Frames von dem Zugangspunkt aktiviert wird, wobei der eine oder die mehreren Trigger-Frames mindestens eine durch einen Zufallszugriff aktivierte Ressourceneinheit umfasst.

6. Nichtflüchtiges computerlesbares Medium nach Anspruch 1, wobei das zweite Übertragungsverfahren aufgrund eines Empfangens einer Bestätigung von dem Zugangspunkt deaktiviert wird, die anzeigt, dass eine mithilfe des ersten Übertragungsverfahrens zu dem Zugangspunkt übertragene Übertragung erfolgreich war.

7. Nichtflüchtiges computerlesbares Medium nach Anspruch 1, wobei sowohl das erste Übertragungsverfahren als auch das zweite Übertragungsverfahren zum Ausführen eines oder mehrerer Neuübertragungsversuche der Daten aktiviert werden.

8. Verfahren, umfassend:
Empfangen (410), in einem Computervorrichtungsprozessor einer drahtlosen Kommunikationsstation, eines oder mehrerer Trigger-Frames von einem Zugangspunkt, wobei jeder des einen oder der mehreren Trigger-Frames Zuteilungsinformationen für eine Übertragung umfasst;
Ausführen (420), durch den Computervorrichtungsprozessor, eines ersten Übertragungsversuchs von Daten mithilfe eines ersten Übertragungsverfahrens und mithilfe der Zuteilungsinformationen;
Ermitteln (420), durch den Computervorrichtungsprozessor, dass der erste Übertragungsversuch der Daten nicht erfolgreich war;
Ausführen (430), durch den Computervorrichtungsprozessor, eines oder mehrerer Neuübertragungsversuche der Daten mithilfe des ersten Übertragungsverfahrens und mithilfe der Zuteilungsinformationen;
Ermitteln (440), durch den Computervorrichtungsprozessor, dass der eine oder die mehreren Neuübertragungsversuche der Daten nicht erfolgreich war;
Ermitteln (440), durch den Computervorrichtungsprozessor, dass eine Anzahl von nicht erfolgreichen Neuübertragungsversuchen der Daten einen Schwellenwert erreicht oder überschritten hat; und
Aktivieren (450), durch den Computervorrichtungsprozessor, eines zweiten Übertragungsverfahrens zum Ausführen eines zweiten Übertragungsversuchs der Daten mithilfe der Zuteilungsinformationen, wobei das Aktivieren des zweiten Übertragungsverfahrens umfasst:
zufälliges Auswählen, durch den Computervorrichtungsprozessor, eines Rückzählwerts (320, 330, 340, 360, 370) für die drahtlose Kommunikationsstation, wobei der Rückzählwert eine ganze Zahl größer als Null ist;
Zuweisen, durch den Computervorrichtungsprozessor, des Rückzählwerts zu der drahtlosen Kommunikationsstation;
Verringern, durch den Computervorrichtungsprozessor, des Rückzählwerts um Eins zum Identifizieren Jeder durch einen Zufallszugriff aktivierten Ressourceneinheit, die in dem einen oder den mehreren Trigger-Frames enthalten ist, die von dem Zugangspunkt empfangen werden; und
Ausführen, durch den Computervorrichtungsprozessor, eines zweiten Übertragungsversuchs der Daten mithilfe des zweiten Übertragungsverfahrens, wenn der Rückzählwert Null erreicht.

9. Verfahren nach Anspruch 8, das außerdem umfasst:
Auswählen, durch den Computervorrichtungsprozessor, einer durch einen Zufallszugriff aktivierten Ressourceneinheit, wenn der Rückzählwert Null erreicht, wobei die durch einen Zufallszugriff aktivierte Ressourceneinheit zufällig ausgewählt wird;
Auswählen, durch den Computervorrichtungsprozessor, einer vorbestimmten, durch einen Zufallszugriff aktivierten Ressourceneinheit, wenn der Rückzählwert Null erreicht; und
Auswählen, durch den Computervorrichtungsprozessor, einer als Nächste zur Verfügung stehenden, durch einen Zufallszugriff aktivierten Ressourceneinheit, wenn der Rückzählwert Null erreicht; und
wobei mindestens Eine der zufällig ausgewählten durch einen Zufallszugriff aktivierten Ressourceneinheit, der vorbestimmten, durch einen Zufallszugriff aktivierten Ressourceneinheit und der als Nächste zur Verfügung stehenden, durch einen Zufallszugriff aktivierten Ressourceneinheit während des Ausführens des zweiten Übertragungsversuchs der Daten verwendet wird.

10. Verfahren nach Anspruch 8, wobei das zweite Übertragungsverfahren aufgrund eines Empfangens einer Bestätigung einer erfolgreichen Übertragung von dem Zugangspunkt deaktiviert wird und wobei das Deaktivieren des zweiten Übertragungsverfahrens ein Neuaktivieren des ersten Übertragungsverfahrens umfasst.

11. Verfahren nach Anspruch 8, wobei das Aktivieren des zweiten Übertragungsverfahrens umfasst:
Vergleichen, durch den Computervorrichtungsprozessor, der ermittelten Anzahl von nicht erfolgreichen Neuübertragungsversuchen der Daten mit einem vorbestimmten Schwellenwert für die Neuübertragungsversuche; und
Ermitteln, durch den Computervorrichtungsprozessor, dass die ermittelte Anzahl von nicht erfolgreichen Neuübertragungsversuchen der Daten größer als der, oder gleich dem vorbestimmten Schwellenwert für die Neuübertragungsversuche ist.

12. Verfahren nach Anspruch 8, wobei das zweite Übertragungsverfahren als Reaktion auf ein Empfangen eines oder mehrerer Trigger-Frames von dem Zugangspunkt aktiviert wird, wobei der eine oder mehreren Trigger-Frames mindestens eine durch einen Zufallszugriff aktivierte Ressourceneinheit umfasst.

13. Verfahren nach Anspruch 8, das außerdem umfasst:
Deaktivieren des zweiten Übertragungsverfahrens aufgrund eines Empfangens einer Bestätigung von dem Zugangspunkt, die anzeigt, dass eine mithilfe des ersten Übertragungsverfahrens zu dem Zugangspunkt übertragene Übertragung erfolgreich war.

## Revendications

1. Support non transitoire lisible par ordinateur sur lequel sont stockées des instructions qui, lorsqu'elles sont exécutées par un ou plusieurs processeurs d'une station de communication sans fil, amènent un dispositif à effectuer des opérations consistant à :
recevoir (410), au niveau de la station (120) de communication sans fil, une ou plusieurs trames de déclenchement provenant d'un point d'accès, la trame ou chacune des trames de déclenchement comportant des informations d'attribution pour une transmission ;
provoquer l'exécution (420) d'une première tentative de transmission de données au niveau de la station de communication sans fil à l'aide d'un premier procédé de transmission et en utilisant les informations d'attribution ;
déterminer (420) que la première tentative de transmission des données est infructueuse ;
provoquer l'exécution (430) d'une ou de plusieurs tentatives de retransmission des données au niveau de la station de communication sans fil à l'aide du premier procédé de transmission et en utilisant les informations d'attribution ;
déterminer (440) que la ou les tentatives de retransmission des données sont infructueuses ;
déterminer (450) qu'un nombre de tentatives infructueuses de retransmission des données a atteint ou dépassé un seuil ; et
provoquer l'activation (450) d'un second procédé de transmission au niveau de la station de communication sans fil pour exécuter une seconde tentative de transmission des données en utilisant les informations d'attribution, l'activation du second procédé de transmission comportant les étapes consistant à :
sélectionner une valeur (320, 330, 340, 360, 370) de comptage de replis pour la station de communication sans fil, la valeur de comptage de replis étant un entier supérieur à zéro qui est sélectionné au hasard ;
affecter la valeur de comptage de replis à la station (120) de communication sans fil ;
décrémenter la valeur de comptage de replis de un pour l'identification de chaque unité de ressources apte à l'accès aléatoire comprise dans la ou les trames de déclenchement reçues en provenance du point d'accès ; et
provoquer l'exécution la seconde tentative de transmission des données à l'aide du second procédé de transmission lorsque la valeur de comptage de replis atteint zéro.

2. Support non transitoire lisible par ordinateur selon la revendication 1, l'utilisation du second procédé de transmission comportant au moins une des étapes consistant à :
sélectionner une unité de ressources apte à l'accès aléatoire lorsque la valeur de comptage de replis atteint zéro, l'unité de ressources apte à l'accès aléatoire étant sélectionnée au hasard ;
sélectionner une unité de ressources prédéterminée apte à l'accès aléatoire lorsque la valeur de comptage de replis atteint zéro ; et
sélectionner une unité de ressources disponible suivante apte à l'accès aléatoire lorsque la valeur de comptage de replis atteint zéro ; et
au moins une unité parmi l'unité de ressources apte à l'accès aléatoire sélectionnée au hasard, l'unité de ressources prédéterminée apte à l'accès aléatoire, et l'unité de ressources disponible suivante apte à l'accès aléatoire étant utilisée lors de l'exécution de la seconde tentative de transmission des données.

3. Support non transitoire lisible par ordinateur selon la revendication 1, le second procédé de transmission étant désactivé sur la base de la réception, en provenance du point d'accès, d'un accusé de réception d'une transmission réussie, et la désactivation du second procédé de transmission comportant la réactivation du premier procédé de transmission.

4. Support non transitoire lisible par ordinateur selon la revendication 1, l'activation du second procédé de transmission comportant les étapes consistant à :
comparer le nombre déterminé de tentatives infructueuses de retransmission des données à une valeur seuil prédéterminée de tentatives de retransmission ; et
déterminer que le nombre déterminé de tentatives infructueuses de retransmission des données est supérieur ou égal à la valeur seuil prédéterminée de tentatives de retransmission.

5. Support non transitoire lisible par ordinateur selon la revendication 1, le second procédé de transmission étant activé en réaction à la réception d'une ou de plusieurs trames de déclenchement en provenance du point d'accès, la ou les trames de déclenchement comportant au moins une unité de ressources apte à l'accès aléatoire.

6. Support non transitoire lisible par ordinateur selon la revendication 1, le second procédé de transmission étant désactivé sur la base de la réception, en provenance du point d'accès, d'un accusé de réception indiquant qu'une transmission envoyée au point d'accès à l'aide du premier procédé de transmission a réussi.

7. Support non transitoire lisible par ordinateur selon la revendication 1, le premier procédé de transmission et le second procédé de transmission étant tous deux activés pour exécuter une ou plusieurs tentatives de retransmission des données.

8. Procédé comportant :
la réception (410), par un processeur de dispositif informatique d'une station de communication sans fil, d'une ou de plusieurs trames de déclenchement en provenance d'un point d'accès, la trame ou chacune des trames de déclenchement comportant des informations d'attribution pour une transmission ;
l'exécution (420), par le processeur de dispositif informatique, d'une première tentative de transmission de données à l'aide d'un premier procédé de transmission et en utilisant les informations d'attribution ;
la détermination (420), par le processeur de dispositif informatique, du fait que la première tentative de transmission des données est infructueuse ;
l'exécution (430), par le processeur de dispositif informatique, d'une ou de plusieurs tentatives de retransmission des données à l'aide du premier procédé de transmission et en utilisant les informations d'attribution ;
la détermination (440), par le processeur de dispositif informatique, du fait que la ou les tentatives de retransmission des données sont infructueuses ;
la détermination (440), par le processeur de dispositif informatique, du fait qu'un nombre de tentatives infructueuses de retransmission des données a atteint ou dépassé un seuil ; et
l'activation (450), par le processeur de dispositif informatique, d'un second procédé de transmission pour exécuter une seconde tentative de transmission des données en utilisant les informations d'attribution, l'activation du second procédé de transmission comportant :
la sélection aléatoire, par le processeur de dispositif informatique, d'une valeur (320, 330, 340, 360, 370) de comptage de replis pour la station de communication sans fil, la valeur de comptage de replis étant un entier supérieur à zéro ;
l'affectation, par le processeur de dispositif informatique, de la valeur de comptage de replis à la station de communication sans fil ;
la décrémentation de un, par le processeur de dispositif informatique, de la valeur de comptage de replis pour l'identification de chaque unité de ressources apte à l'accès aléatoire comprise dans la ou
les trames de déclenchement reçues en provenance du point d'accès ; et
l'exécution, par le processeur de dispositif informatique, d'une seconde tentative de transmission des données à l'aide du second procédé de transmission lorsque la valeur de comptage de replis atteint zéro.

9. Procédé selon la revendication 8, comportant en outre :
la sélection, par le processeur de dispositif informatique, d'une unité de ressources apte à l'accès aléatoire lorsque la valeur de comptage de replis atteint zéro, l'unité de ressources apte à l'accès aléatoire étant sélectionnée au hasard ;
la sélection, par le processeur de dispositif informatique, d'une unité de ressources prédéterminée apte à l'accès aléatoire lorsque la valeur de comptage de replis atteint zéro ; et
la sélection, par le processeur de dispositif informatique, d'une unité de ressources disponible suivante apte à l'accès aléatoire lorsque la valeur de comptage de replis atteint zéro ; et
au moins une unité parmi l'unité de ressources apte à l'accès aléatoire sélectionnée au hasard, l'unité de ressources prédéterminée apte à l'accès aléatoire, et
l'unité de ressources disponible suivante apte à l'accès aléatoire étant utilisée lors de l'exécution de la seconde tentative de transmission des données.

10. Procédé selon la revendication 8, le second procédé de transmission étant désactivé sur la base de la réception, en provenance du point d'accès, d'un accusé de réception d'une transmission réussie, et la désactivation du second procédé de transmission comportant la réactivation du premier procédé de transmission.

11. Procédé selon la revendication 8, l'activation du second procédé de transmission comportant :
la comparaison, par le processeur de dispositif informatique, du nombre déterminé de tentatives infructueuses de retransmission des données à une valeur seuil prédéterminée de tentatives de retransmission ; et
la détermination, par le processeur de dispositif informatique, du fait que le nombre déterminé de tentatives infructueuses de retransmission des données est supérieur ou égal à la valeur seuil prédéterminée de tentatives de retransmission.

12. Procédé selon la revendication 8, le second procédé de transmission étant activé en réaction à la réception d'une ou de plusieurs trames de déclenchement en provenance du point d'accès, la ou les trames de déclenchement comportant au moins une unité de ressources apte à l'accès aléatoire.

13. Procédé selon la revendication 8, comportant en outre :
la désactivation du second procédé de transmission sur la base de la réception, en provenance du point d'accès, d'un accusé de réception indiquant qu'une transmission envoyée au point d'accès à l'aide du premier procédé de transmission a réussi.
